# EUROPEAN PATENT SPECIFICATION

(11) **EP 4 344 544 B1**
(45) Date of publication and mention of the grant of the patent: **09.07.2025**
(21) Application number: 23200788.0
(22) Date of filing: 29.09.2023
(51) Int. Cl.: A01N 1/143

(54) **EXCHANGE METHOD FOR PERFUSION LIQUIDS FOR PERFUSING AN ORGAN THROUGH AN EX VIVO PERFUSION SYSTEM**
METHODE ZUM AUSTAUSCHEN VON PERFUSIONSFLÜSSIGKEITEN ZUR PERFUSION EINES ORGANS MITTELS EINES EX VIVO PERFUSIONSSYSTEMS
MÉTHODE POUR ÉCHANGER DES FLUIDES DE PERFUSION POUR PERFUSER UN ORGANE PAR UN SYSTÈME DE PERFUSION EX VIVO

(30) Priority: 30.09.2022 IT 202200020202
(43) Date of publication of application: 03.04.2024
(73) Proprietor: Aferetica S.r.l., 40138 Bologna (IT)
(72) Inventor: ATTI, Mauro, 40138 Bologna (IT)
(74) Representative: Studio Torta S.p.A.

(56) References cited:
- EP-A1- 3 977 854
- WO-A1-2015/138263
- CN-A- 110 558 310
- US-A- 5 856 081
- US-B1- 6 642 045
- OTTO B VAN LEEUWEN ET AL: "Transplantation of High-risk Donor Livers After Ex Situ Resuscitation and Assessment Using Combined Hypo- and Normothermic Machine Perfusion: A Prospective Clinical Trial", ANNALS OF SURGERY, LIPPINCOTT WILLIAMS & WILKINS, US, vol. 270, no. 5, 1 January 2019 (2019-01-01), pages 906 - 914, XP009539947, ISSN: 1528-1140, DOI: 10.1097/SLA.0000000000003540

## Description

### TECHNICAL SECTOR OF THE INVENTION

The present invention relates in general to the field of *ex vivo* organ transplantation, in particular to the management of perfusion liquids to be used in an *ex vivo* perfusion system, for example for the perfusion of transplantation organs such as kidney and liver.

In particular, the present invention relates to an exchange method for perfusion liquids for perfusing an organ through an *ex vivo* perfusion system.

### PRIOR ART

As is known, the transplantation of organs, such as liver and kidney, represents the main solution to cure patients suffering from degenerative pathologies, in particular with acute evolution (for example, kidney and/or liver pathologies, such as chronic renal failure and, respectively, acute or chronic liver diseases).

Currently, organ transplantation is widely used, as it is effective and with considerable advantages such as, for example, the functional restoration of the transplanted organ and a better quality of life of the patient undergoing transplantation. However, there is a non-negligible gap between the low number of organs that can actually be transplanted (that is, organs coming from suitable donors) and the growing number of patients in need of an organ transplantation.

Because of the aforesaid gap, in recent years also the organs coming from non-standard or marginal donors (*Expanded Criteria Donors,* ECD), i.e. organs previously considered as critical and unsuitable for transplantation, have been increasingly considered as actually transplantable organs. In particular, the organs coming from marginal donors comprise organs coming from: non heart beating donors *(NHBD* or *Donation after Cardiac Death,* DCD), whose death is declared according to cardiac criteria; elderly donors (i.e. over the age of sixty); and from donors under the age of sixty and with previous pathologies (e.g., diabetes mellitus, hypertension and renal failure) or with infectious diseases (e.g., hepatitis and HIV).

A problem associated with the use of the aforesaid organs from marginal donors, in particular from non heart beating donors, is the high percentage of post-transplant complications, deriving from a period of additional warm ischemia that the organs have to face during the period of death determination. In detail, these complications are aggravated by the fact that determining the death of a non heart beating donor must take place with continuous ECG recording for a no touch period; in particular, according to Italian law, this determination period is at least equal to twenty minutes and is added to the time elapsed for reaching the cardiocirculatory arrest and to the time necessary for the re-perfusion of the abdominal organs with extracorporeal support. In order to restore the normal circulation of the organ of interest, the latter is subjected to a re-perfusion step (that is, a step wherein the blood is circulated again in the organ), necessary to restore the functionality of the organs themselves and preserve them from the absence of spontaneous circulation. This re-perfusion, however, can aggravate the damages caused by the previous period of additional warm ischemia; in particular, the re-perfusion step can result in a delayed functional recovery, acute rejection and a chronic dysfunction of the organ once the latter has been transplanted into the patient.

In summary, the aforesaid organs from marginal donors are considered as a high-risk category, as they have a higher probability of dysfunction in the immediate post-transplant period and a higher risk of graft loss.

Known solutions make available systems capable of solving at least part of the problems connected to the aforesaid organs from marginal donors. In particular, the known solutions employ *ex vivo* perfusion systems that allow the organs from a marginal donor to be dynamically and continuously preserved, thus limiting the damages due to the aforesaid problems.

As is known, the aforesaid perfusion systems allow to preserve the organ to be transplanted by perfusion, which takes up and simulates the physiological perfusion of the organ itself through the blood vessels of the latter by means of a solution, defined as perfusion liquid, characteristic for each organ to be transplanted.

The operating modes of a perfusion system of known type are typically defined as a function of the temperature of the perfusion liquid. In particular, the following operating methods are used:
- perfusion in hypothermic mode *(Hypothermic Machine Perfusion,* HMP), wherein the temperature of the perfusion liquid is lower than 12°C, typically comprised between 0°C and 4°C;
- perfusion in mid- and sub-normothermal mode *(Mid- and Subnormothermic Machine Perfusion,* SMP, wherein the temperature of the perfusion liquid is comprised between 12°C and 34°C; and
- perfusion in normothermic mode *(Normothermic Machine Perfusion,* NMP), wherein the temperature of the perfusion liquid is comprised between 35°C and 37°C.

The hypothermic perfusion mode can be advantageously used to preserve the organ considered, slowing down its metabolism and keeping it protected from any ischemic events. On the other hand, the normothermic perfusion mode is advantageously usable for the preservation of the organ under physiological-like conditions, with the need to provide appropriate amounts of oxygen and nutrients for the correct maintenance of the same organ.

Different thermal modes require the use of different types of perfusion liquids. In particular, two types of perfusion liquids are typically used, namely:
- acellular solutions, also known as physiological-like, for perfusion in hypothermic mode; and
- solutions based on concentrated blood cells, containing red blood cells, for the perfusion in sub- and normothermic mode.

Over the years, several perfusion protocols have been developed and implemented that provide for a combination of the different thermal modes, such as, for example, the hypothermia - gradual rewarming *(Controlled Oxygenated Rewarming,* COR) - normothermia protocol. The combination of different thermal modes allows the treated organ to be gradually brought from a state of hypothermia to a state of normothermia (i.e., physiological-like) in an atraumatic manner, thus avoiding thermal shocks that might compromise the characteristics of the organ and the consequent transplant. In addition, the combination of different thermal modes implies the need to adapt the perfusion conditions of the organ **(i.e.** the perfusion parameters and the perfusion liquids) to the different operating temperatures, **i.e.** it is necessary to be able to replace the perfusion liquid so as to adapt it to the target thermal conditions and at the same time to continue the temperature variation procedure.

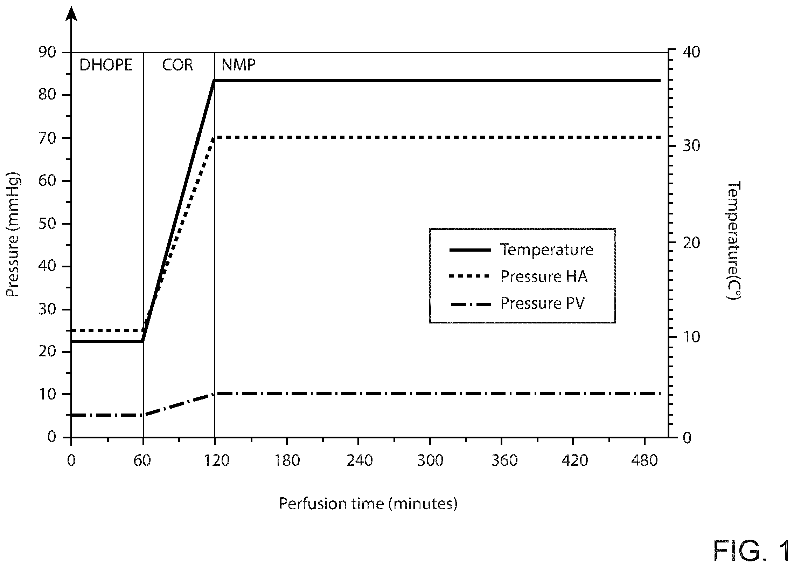

An example of combination of the different treatment models of known type is reported below and schematically shown in Figure 1; in particular, Figure 1 shows a model applicable to the case wherein there is perfusion of the liver and wherein the hypothermia, COR and normothermia steps are combined. Even more particularly, such steps are called DHOPE, COR, and NMP, as shown in Figure 1. In particular, in the COR step there is a gradual increase in temperature according to the following steps:
1) initial step (at minute 60), wherein the temperature is equal to approximately 9°C, the HA *(Hepatic Artery)* pressure is equal to 25 mmHg and the PV pressure *(Portal Vein)* is equal to 5 mmHg;
2) first intermediate step, indicatively at 15 minutes from the initial step, wherein the temperature is approximately equal to 16°C, the HA pressure is equal to 30 mmHg and the PV pressure is equal to 7 mmHg;
3) second intermediate step, indicatively at 30 minutes from the initial step, wherein the temperature is approximately equal to 20°C, the HA pressure is equal to 40 mmHg and the PV pressure is equal to 8 mmHg;
4) third intermediate step, indicatively at 45 minutes from the initial step, wherein the temperature is approximately equal to 30°C, the HA pressure is equal to 60 mmHg and the PV pressure is equal to 9 mmHg; and
5) final step (at minute 120), indicatively at 60 minutes from the initial step, wherein the temperature is approximately equal to 37°C, the HA pressure is equal to 70 mmHg and the PV pressure is equal to 10 mmHg.

As schematically shown in Figure 1, parallel to the gradual increase in temperature, there is a corresponding profiling of the pressure values and, consequently, a variation of the flow values (not shown) of the perfusion liquids associated with each temperature value, i.e. there is a corresponding pressure and flow trend.

It should be noted that the model shown in Figure 1, representative of a liver perfusion model, is independent of the type of organ treated and can also be extended to other types of organ, for example the kidney.

Considering the above, to date, switching from a perfusion in hypothermic mode to one in gradual rewarming mode and subsequently to normothermia, requires that, at the end of the perfusion period in hypothermic mode, the organ is disconnected from the perfusion system. Subsequently, the organ to be perfused is placed in the ice to reduce the deterioration thereof. In parallel, a perfusion circuit of the *ex vivo* perfusion system is emptied of the hypothermic perfusion liquid and then filled with the perfusion liquid intended for sub- and normothermia. Once the filling procedure of the perfusion circuit is ended, the organ is recovered from the ice and reconnected to restart the perfusion. Consequently, the temperature is gradually raised to have a passage from 10°C to 31°C in indicatively one hour of time. In addition to what is indicated, in order to support the metabolic needs of the organs, once the temperature of 18-20°C has been reached, the perfusion liquid is added with red blood cells.

Considering the operations indicated above, in any thermal rise, an operator is responsible for selecting, from time to time and manually, the target perfusion parameters (in particular, pressure and flow of the perfusion liquid). EP 3 977 854 A1 discloses an ex vivo perfusion system comprising: a container for an organ to be perfused, the container comprising a reservoir containing a perfusion liquid; a perfusion circuit fluidically connected to the reservoir to perfuse the organ with the perfusion liquid; collection means configured to receive the perfusion liquid at the end of the perfusion; and a thermoregulation plate and a thermoregulation system, the thermoregulation system being coupled to the thermoregulation plate, wherein the thermoregulation plate is designed to carry the container and to heat or cool the perfusion liquid contained in the container. US 6 642 045 B1 discloses perfusion regeneration in ex vivo perfusion of an organ, wherein means are provided to replace depleted perfusate with fresh perfusate without interrupting the perfusion. For this purpose two volume-regulatable pumps are provided, wherein the first pump can be operated to extract depleted perfusate, and the second pump is configured to immediately introduce an equal volume of fresh perfusate. The rate of exchange may be dependent on the temperature.

### OBJECT AND SUMMARY OF THE INVENTION

In light of the above observations, the Applicant has observed that the current methods for switching from perfusions in hypothermic mode to those in sub- and normothermic mode are susceptible to significant improvements, in particular relatively to the possibility of not subjecting the organ to be perfused to non-gradual thermal variations that might compromise its characteristics, especially in view of its transplantation. In addition, most of the known solutions do not allow to have a system and a method that allow to gradually and automatically perfuse the organ to be transplanted with different perfusion liquids, thus making the constant intervention of an operator necessary.

The present invention therefore aims to solve the aforementioned problems present in the prior art by implementing an exchange method for perfusion liquids for perfusing an organ through an *ex vivo* perfusion system.

According to the present invention, an exchange method for perfusion liquids for perfusing an organ through an ex *vivo* perfusion system is thus realized, as claimed in the appended claims.

### BRIEF DESCRIPTION OF THE DRAWINGS

Figure 1 shows a graph reporting the trend of the pressure and of the temperature over time during a perfusion process in hypo- to sub- and normothermic mode of known type.
Figure 2 shows a perspective view with transparent parts of an *ex vivo* perfusion system of an organ.
Figure 3 shows a section of an electromedical perfusion unit of the perfusion system of Figure 2.
Figure 4 shows in exploded view a receptacle that is couplable to the electromedical perfusion unit forming part of the perfusion system of Figures 2 and 3 according to an embodiment.
Figure 5 shows in exploded view a receptacle that is couplable to the electromedical perfusion unit forming part of the perfusion system of Figures 2 and 3 according to another embodiment, alternative to the embodiment of Figure 4.
Figures 6A and 6B schematically show respective kidney perfusion modes of the system of Figures 2 and 3; and
Figure 7 schematically shows a liver perfusion mode of the system of Figures 2 and 3.

### DETAILED DESCRIPTION OF PREFERRED EMBODIMENTS OF THE INVENTION

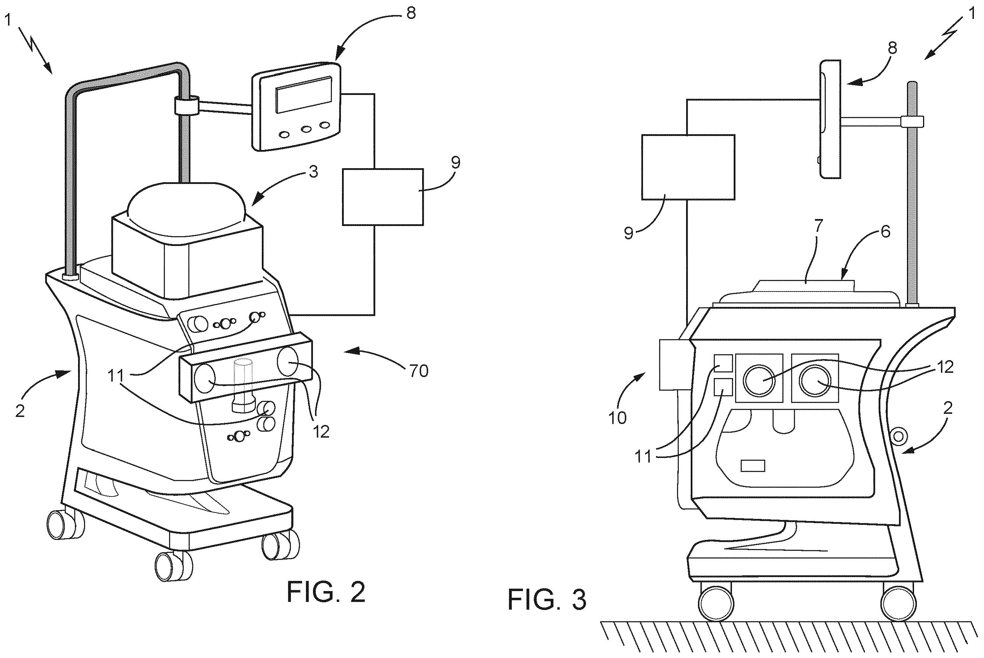

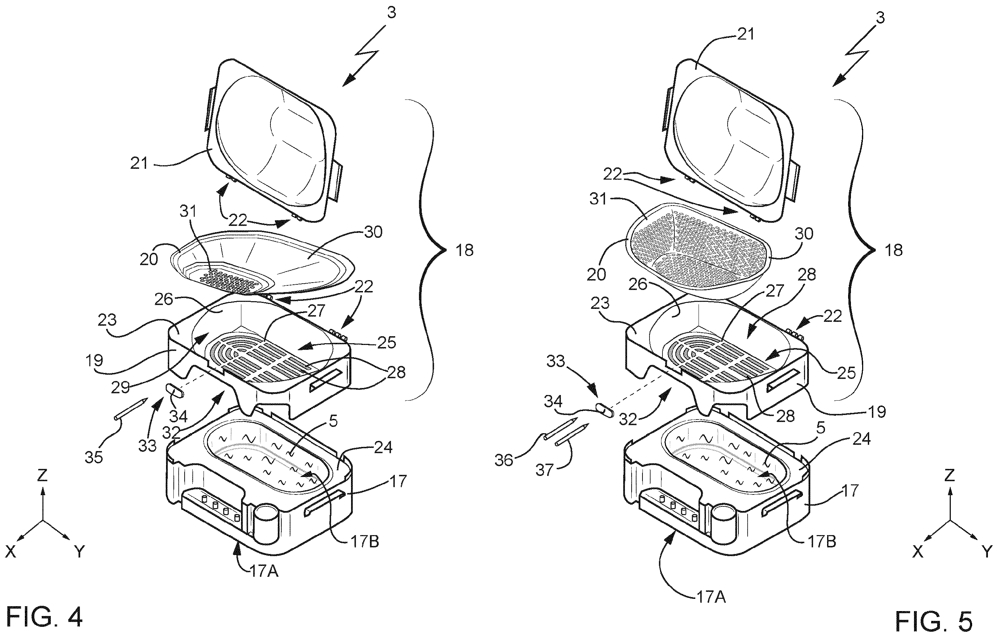

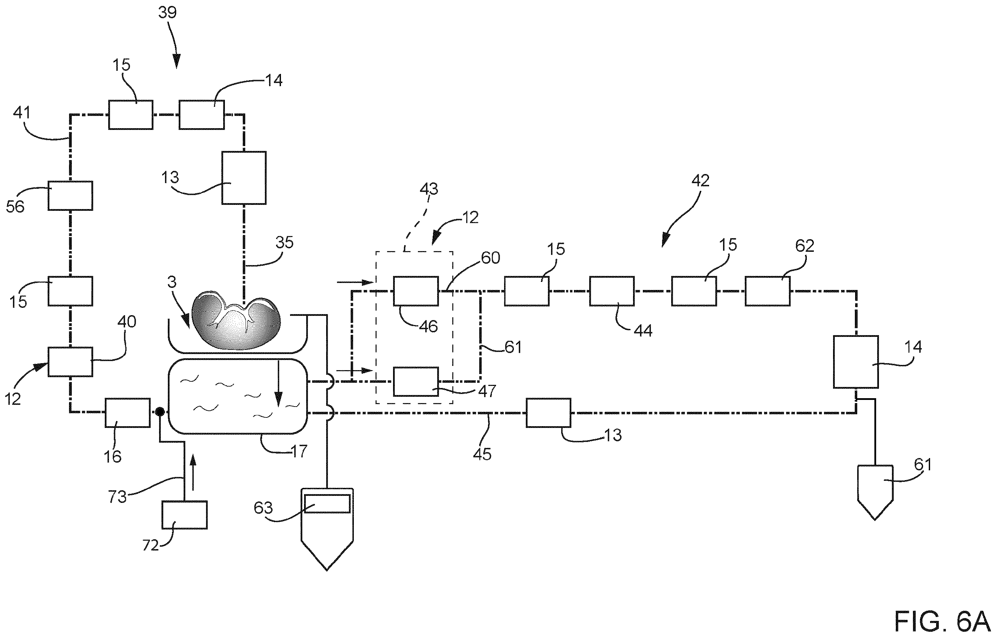

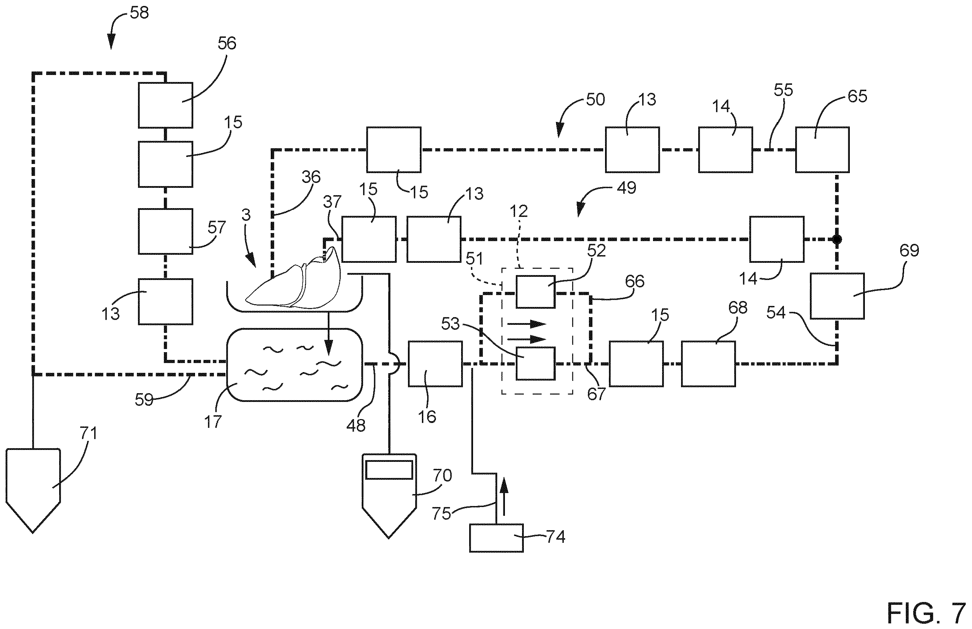

Figures 2 and 3 show an *ex vivo* perfusion system (hereinafter defined as the system) **1,** which comprises an electromedical perfusion unit **2** (shown in section in Figure 3). The *ex vivo* perfusion system **1** further comprises a container **3** (shown in transparency in Figures 4 and 5), designed to be coupled to the electromedical perfusion unit **2;** the container **3** is further designed to contain, in use, an organ, for example a kidney or a liver (shown respectively in Figures 6A-6B and 7), to be perfused with a perfusion liquid. In the present embodiment, the container **3** has, for example, a quadrangular shape in top view (e.g., rectangular with bevelled corners) and is configured to contain, in use, the perfusion liquid.

The electromedical perfusion unit **2** comprises a thermoregulation system **6** (Figure 3), coupled to a thermoregulation plate **7;** in particular, the thermoregulation plate **7** is adapted to carry the container **3** and to rewarm or cool thanks to the thermoregulation system **6** for rewarming or cooling the perfusion liquid contained in the container **3.**

The system **1** further comprises a user interface **8,** e.g. a touchscreen display, coupled to an electronic control unit **9.** In particular, the electronic control unit **9** is coupled to the electromedical perfusion unit **2;** the user interface **8** is configured to show information, which is received by the electronic control unit **9,** relative to the perfusion operation (also known as reconditioning) of the organ when the system **1** is in use. According to an aspect of the present invention, shown in Figures 2 and 3, the electronic control unit **9** is integrated into the electromedical perfusion unit **2.**

The system **1** further comprises a control system **10,** which includes:
- a plurality of sensors **11,** adapted to detect respective physical quantities related to the perfusion liquid and, therefore, to the perfusion mode of the organ when the system **1** is in use; and
- a plurality of pumps **12,** adapted to perform the perfusion the organ housed in the container **3** when the system **1** is in use.

With reference to Figures 6A-6B and 7, the plurality of sensors **11** comprises:
- temperature sensors **13,** adapted to detect a temperature T of the perfusion liquid when the system **1** is in use;
- flow and air presence sensors **14,** adapted to detect a flow Φ of the perfusion liquid, as well as the presence of air bubbles in the same perfusion liquid, when the system **1** is in use;
- pressure sensors **15,** adapted to detect a pressure p of the perfusion liquid when the system **1** is in use and to verify that the perfusion of the organ takes place substantially physiologically; and
- level sensors **16,** adapted to detect the amount of perfusion liquid in the container **3** when the system **1** is in use.

In particular, the flow and air presence sensors **14** are designed to:
- detect amounts indicative of the flow of the flowing perfusion liquid, generate corresponding data and transmit the latter to the electronic control unit **9;** and
- detect amounts indicative of the presence of any air bubbles, generate corresponding data and transmit the latter to the electronic control unit **9.**

Furthermore, the flow and air presence sensors **14** are coupled to electric clamps (not shown), which are configured to define travelling paths of the flow of the perfusion liquid.

Furthermore, the electronic control unit **9** is designed to generate alarm notifications as a function of the data relating to the amounts indicative of the flow of the flowing perfusion liquid and/or amounts indicative of the presence of any air bubbles transmitted by the flow and air presence sensors **14.**

In addition, the level sensors **16** are configured to verify that the amount of perfusion liquid does not fall beyond a threshold value, so as to prevent the container **3** from emptying and, at the same time, that there is no accidental entry of air during the perfusion of the organ (i.e., that gas embolism and, therefore, organ damage are avoided). It should be noted that, if the level sensors **16** are faulty (i.e. they do not warn the user, for example by means of an alarm sound, of the excessive reduction of the amount of perfusion liquid in the container **3)** and, therefore, allow the flow of air during the perfusion of the organ, the flow and presence of air sensors **14** are configured to compensate for any malfunctions, thus avoiding the deterioration of the organ. In other words, the level sensors **16** and the flow and air presence sensors **14** cooperate for the correct conduct of the organ perfusion process.

With reference to Figures 4 and 5, the container **3** comprises a reservoir **17,** which is couplable to the thermoregulation plate **7** of the electromedical perfusion unit **2;** in particular, the reservoir **17** is designed to contain the perfusion liquid. The container **3** further comprises an upper portion **18,** fluidically and physically couplable to the reservoir **17** and adapted to contain the organ to be perfused.

The upper portion **18** is carried by the reservoir **17** so that the organ is arranged at a distance from the surface of the perfusion liquid contained in the reservoir **17,** i.e., as shown in Figures 4 and 5, that the organ is arranged in a raised position with respect to the perfusion liquid; in other words, the organ is not immersed into the latter. In addition, the reservoir **17** comprises:
- a base **17A,** configured to fix the container **3** to the electromedical unit **2;** and
- a conductive base **17B** preferably made of conductive material (for example, metal) and thermally coupled to the thermoregulation plate **7;** moreover, the conductive base **17B** is configured to contain the perfusion liquid.

In this way, the reservoir **17,** in particular the perfusion liquid, can be warmed up or cooled by thermal conduction by the thermoregulation plate **7** when the thermoregulation system **6** is in use.

Again with reference to Figures 4 and 5, the upper portion **18** here has a quadrangular shape in top view (e.g., rectangular with bevelled corners) and is for example acrylonitrile-butadiene-styrene (ABS). The upper portion **18** comprises:
- a receptacle **19,** couplable to the reservoir **17** and in fluidic communication with the latter when coupled to the reservoir **17;**
- a tray **20,** couplable to the receptacle **19** and configured to carry the organ to be perfused; and
- a lid **21,** hinged to the receptacle **19** at hinges **22** and configured to move from an open position and a closed position.

In particular, in the open position, the lid **21** allows access to the tray **20** and to position the organ before the perfusion of the latter; conversely, in the closed position, the lid **21** isolates the organ arranged on the tray **20** from the external environment, protecting it and placing it in a substantially sterile environment.

According to another embodiment of the present invention, the lid **21** is hinged to the receptacle **19** at a single hinge **22.**

The lid **21** is made of transparent material so that a user can monitor the perfusion as well as the condition of the organ during the perfusion. In this way, the conductive base **17B** is insulated.

The receptacle **19** comprises a peripheral portion **23,** shaped so as to couple with a corresponding peripheral portion **24** of the reservoir **17;** in other words, the reservoir **17** carries the container **19** at its peripheral portion **24** when the receptacle **3** is assembled. Furthermore, the hinges **22** are arranged here along one side (e.g. a long side) of the peripheral portion **23** of the receptacle **19.**

The receptacle **19** further comprises a central portion **25,** which has a convex shape, in particular resulting, along an axis Z of a Cartesian reference system XYZ, lowered with respect to the peripheral portion **23** of the receptacle **19** itself. In particular, the central portion **25** comprises a curved portion **26,** adapted to join the peripheral portion **23** with a base portion **27,** also forming part of the central portion **25;** in addition, the base portion **27** has a plurality of openings **28,** which allow the fluidic communication between the receptacle **19** and the reservoir **17.** The central portion **25** therefore defines a cavity **29,** which is adapted to allow the passage of the perfusion liquid coming from the organ and directed to the reservoir **17** when the upper portion **18** is coupled to the reservoir **17** itself, i.e. when the container **3** is assembled.

The tray **20** comprises:
- a respective peripheral portion **30,** shaped so as to be couplable to the peripheral portion **23** of the receptacle **19;** and
- a support portion **31,** which is configured to support the organ to be perfused when the system **1** is in use.

In particular, the peripheral portion **30** is made of plastic material, for example PU. The support portion **31** has a tray structure and is manufactured with biocompatible and atraumatic materials, that is, with materials suitable for supporting and accommodating the organ to be perfused, significantly reducing any trauma that may be caused by the support of the aforesaid organ during the perfusion. In the present embodiment, the support portion **31** is made of polyurethane ester. In particular, the support portion **31** is organ-specific, that is, it is dimensioned as a function of the type of organ to be perfused; consequently, the peripheral portion **30** has dimensions that vary as a function of the dimensioning of the support portion **31.** In particular, the support portion **31** of Figure 4 is dimensioned so as to support an adult kidney, which has an average length comprised between 13 cm and 14.5 cm, a width of 8 cm and a thickness of 3 cm; therefore, the support portion **31** of Figure 5 occupies only a part of the tray 20, for example almost half of the latter. The remaining part of the tray **20,** for example the remaining half, is dedicated to the peripheral portion **30.** Conversely, the support portion **31** of Figure 5 is dimensioned so as to accommodate an adult liver, which has on average a thickness at the level of the right lobe comprised between 12 cm and 15 cm, a transverse diameter of about 25 cm and an antero-posterior diameter of about 15 cm; therefore, the support portion **31** of Figure 5 occupies almost the entire area of the tray **19,** leaving an outer frame portion dedicated to the peripheral portion **30.** In other words, the renal support portion 31 of Figure 4 has smaller dimensions than the hepatic support portion **31** of Figure 5, the latter occupying almost the entire available surface of the tray **20.** In addition, the support portion 31 of Figure 5 has a convex shape, that is, it is recessed (i.e., arranged below along the axis Z) with respect to the peripheral portion **30.** Conversely, the support portion **31** of Figure 4 is substantially coplanar with the peripheral portion **30,** i.e. the tray **20** is substantially parallel to a plane XY of the reference system XYZ.

It should be noted that the total dimensions of the renal **20** (Figure 4) and hepatic (Figure 5) trays are the same, i.e. the different dimensioning of the support portion **31** and, therefore, of the peripheral portion **30** of the tray **20** do not affect the total dimensions of the tray **20,** which are therefore fixed. Therefore, the dimensions of the tray **20** and, therefore, of the upper portion **18** are independent of the type of organ to be perfused, since a different dimensioning of the peripheral portions **23, 24** of the receptacle **19** and of the reservoir **17,** as well as of the lid **21** is not required; in this way, the upper portion **18** (and therefore a container 3) has standard dimensions and the tray **20** has a ratio between the dimensions of the support portion **31** and of the peripheral portion **30** that vary as a function of the type of organ.

It should also be noted that, when the tray **20** is coupled to the receptacle **19,** the support portion **31** is arranged at a distance from the perfusion liquid, i.e. the support portion **31** defines with the reservoir **17** and the receptacle **19** a separation volume **V** that allows to prevent the organ from being immersed into the perfusion liquid when the system **1** is in use, thus limiting possible contaminations of the organ, for example by chimera viruses.

The upper portion **19** further comprises a recess **32,** of quadrangular shape (for example, rectangular with bevelled corners), obtained in the receptacle **19** and configured to house a plug **33,** of soft plastic material (for example, silicone); in particular, the plug **33** is adapted to house and allow the stable fixing of connection means for the organ, such as, for example, cannulas suitable to be inserted into veins and/or arteries of the organ itself.

The plug **33** comprises a pair of flaps in soft plastic material, such as silicone, arranged parallel to each other so as to define a slot **34,** which is arranged in a substantially central and longitudinal position (in particular, parallel to the axis Z) for the entire thickness of the same plug 33 and is adapted to receive one or more connection means for the perfusion of the organ.

In particular, in the case of the renal perfusion, the slot **34** of the plug **33** receives a first connection means **35,** adapted to be inserted into the renal artery of the organ. In the case of the hepatic perfusion, the slot **34** of the plug **33** receives a first connection means **36** adapted to be inserted into the hepatic artery of the organ and a second connection means **37** adapted to be inserted into the portal vein of the organ.

The container **3** also comprises first collection means (not shown), adapted to collect any fluids expelled during the perfusion of the organ. In particular, during the renal perfusion, the first collection means are configured to collect, for example, the urine expelled from the organ; during the hepatic perfusion, the first collection means are configured to collect, for example, the bile expelled from the organ.

Before the perfusion of the organ, the temperature of the perfusion liquid contained in the reservoir **17,** in particular in the conductive base **17B,** is varied depending on the perfusion mode that the user wishes to perform on the organ, for example hypo- or sub- and normothermic. To this end, the thermoregulation system **6** allows, as a function of a command transmitted by the electronic control unit **9,** to regulate the temperature of the perfusion liquid.

To this end, the thermoregulation system **6** is designed to allow in use, when the perfusion of the organ takes place, to a user to manually set a temperature or a predefined thermoregulation profile via the user interface **8;** this command is then transmitted to the electronic control unit **9,** which transmits an electrical signal to the thermoregulation system **6** in order to make it operational on the basis of what has been set. It should be noted that, in use, depending on the desired or preset temperature according to the desired thermoregulation profile, the electronic control unit **9** will alternately and respectively activate a rewarming unit (not shown) or a cooling unit (not shown) on one or more occasions during the perfusion of the organ.

In the following, a rewarming step and a cooling step are described separately; in particular, these steps are alternative to each other if, for example, a single temperature value has been set. Conversely, if the user has selected a predefined thermoregulation profile, the aforesaid steps may follow one another (for example, one or more rewarming steps followed by one or more cooling steps or vice versa). Therefore, increasing or decreasing the temperature of the perfusion liquid is performed by combining rewarming steps with cooling steps and vice versa to realize a thermoregulation profile performed manually by a user or automatically by the electronic control unit **9.**

In the rewarming step, the electronic control unit **9** transmits an electrical signal **Sᵣ** adapted to activate the rewarming unit of the thermoregulation system **6** so that it generates warmth and warms the thermoregulation plate **7** by thermal conduction. Consequently, the warmth generated is transmitted always by thermal conduction to the conductive base **17B** of the reservoir **17** and, therefore, to the perfusion liquid, which warms up. In this step, the cooling unit of the thermoregulation system **6** is deactivated by means of the electronic control unit **9.**

According to an embodiment of the system **1,** the rewarming unit comprises a series of resistors; therefore, the signal **Sᵣ** is designed to activate or deactivate the flow of a current in the series of resistors which, according to the known Joule effect, emit warmth with the passage of said current.

In the cooling step, the electronic control unit 9 emits a further electrical signal **S_{f}** as a function of the selection made by the user; in particular, the electrical signal **S_{f}** is a signal that allows the power of the cooling unit of the thermoregulation system 6 to be modulated. It should be noted that, in this step, the rewarming unit of the thermoregulation system **6** is deactivated by means of the electronic control unit **9.**

Consequently, the cooling unit of the thermoregulation system **6** is designed to cool the thermoregulation plate **7** to which it is connected to allow, therefore, a consequent cooling of the base **17B** and of the perfusion liquid contained therein.

According to an embodiment of the system **1,** the cooling unit is a refrigerant circuit and the signal **S_{f}** is designed to activate or deactivate the refrigerant circuit.

The aforesaid steps are performed before and during the actual perfusion operation; in subsequent steps, the thermoregulation system **6** is commanded by the electronic control unit **9** as a function of electrical signals generated by the temperature sensors **13.** In other words, the electronic control unit **9** is designed to constantly monitor the temperature trend of the perfusion liquid and commands the thermoregulation system **6** so as to maintain this temperature constant or to regulate this temperature appropriately. It should be noted that the user can modify the temperature of the perfusion liquid at any time via the user interface; if there is a modification in the chosen temperature value, the electronic control unit **9** will command the thermoregulation system **6** so that the perfusion liquid is brought to the new chosen temperature value.

Renal and hepatic perfusion modes are now described with reference to Figures 6A-6B and 7, respectively.

Initially, the user interface **8** notifies the user for the latter to select the type of treatment to be performed on the organ (in particular, with reference to this system **1,** renal perfusion or hepatic perfusion). Once the type of treatment to be performed on the organ has been selected, the user sets a plurality of initial parameters **pᵢ,** comprising temperature parameters **Tᵢ.** In addition, the user can select the presence of any steps of oxygenation and/or purification of the perfusion liquid.

At the same time, the user mounts and arranges a perfusion circuit and a possible oxygenation/purification circuit for the organ to be treated; in particular, the perfusion and oxygenation/purification circuits are selected depending on the type of treatment selected and of the parameters set; in addition, the user mounts the reservoir **17** on the thermoregulation plate **7** of the electromedical perfusion unit **2.**

Before performing the renal or hepatic perfusion by means of the perfusion and/or depuration/oxygenation circuits, the system **1** is operated under vacuum, that is, in the absence of the organ in order to verify the correct functionality thereof and to allow to the perfusion liquid to be distributed evenly in the perfusion and/or oxygenation/purification circuits, eliminating any air bubbles therein.

Subsequently, the user places the organ on the tray **20,** connecting it only to the first connection means **35** in the case of renal perfusion or to the first and second connection means **36, 37** in the case of hepatic perfusion. Then, the user transfers the upper portion **18** onto the reservoir **17,** de facto assembling the container **3** on the electromedical perfusion unit **2.** It should be noted that, in this step, the connection means **35-37** and the perfusion and/or oxygenation/purification circuits are connected, thus obtaining the renal and hepatic treatment circuits shown in Figures 6A-6B and 7. In particular, in case of renal perfusion, only the first connection means **35** are used, for example a cannula, which, as anticipated above, are inserted into the renal artery of the organ. In case of hepatic perfusion, both the first connection means **36** which, as anticipated above, are connected to the hepatic artery of the organ and the second connection means **37** which are connected to the portal vein of the organ are used.

With reference to Figure 6A, in the treatment circuit for the renal perfusion, where the organ is a kidney, the system **1** comprises a renal perfusion circuit **39,** which is configured to connect the reservoir **17** with the first connection means **35** and, to direct the perfusion liquid from the reservoir **17** to the organ by means of a first pump **40,** arranged on a first pumping line **41;** in particular, the first pumping line **41** connects the first pump **40** and the first connection means **35.** Further, the first pump **40,** which is an arterial perfusion pump, has a respective rotor (not shown), configured to rotate in a first direction of rotation (e.g., counterclockwise); for example, the first pump **40** is a peristaltic pump. In further embodiments, not shown here, the system 1 may comprise more than one first pump **40,** i.e. there may be several pumps, similar to the first pump **40,** which are arranged in series or arranged in parallel between them, rotating simultaneously, and forming a system of perfusion pumps for the arterial perfusion of the kidney.

The first pump **40** is configured to maintain the pressure and the flow of the perfusion liquid withdrawn from the reservoir **17** as a function of the values of the parameters **pᵢ** detected by the plurality of sensors **11.** The first pump **40** is commanded by the electronic control unit **9,** which generates electrical command signals adapted to modify the value of the rotation speed of the rotor of the first pump **40** as a function of the values of the parameters **pᵢ** detected by the plurality of sensors **11** so that the pressure of the perfusion liquid is constant.

The system **1** also provides for the presence of an oxygenation circuit **42,** which is configured to withdraw the perfusion liquid from the reservoir **17** by means of a pump system **43,** oxygenate it by means of an oxygenator **44** and introduce it again into the reservoir **17** by means of a second pumping line **45.** In particular, the pump system **43** comprises a second and a third pump **46, 47,** comprising respective rotors that rotate in the first direction of rotation (for example, counterclockwise), are connected to the reservoir **17** and are arranged in parallel between them. In particular, the third pump **47** is configured to rotate asynchronously with respect to the second pump **46;** in other words, the rotor of the third pump **47** is offset by an offset angle **α**, which is for example comprised between 45° and 90°. In this way, the performance of the oxygenation circuit **42** is optimized and allows an optimal oxygenation of the organ, in particular for high perfusion liquid flows. In the present embodiment, the second and third pump **46, 47** are, for example, peristaltic pumps.

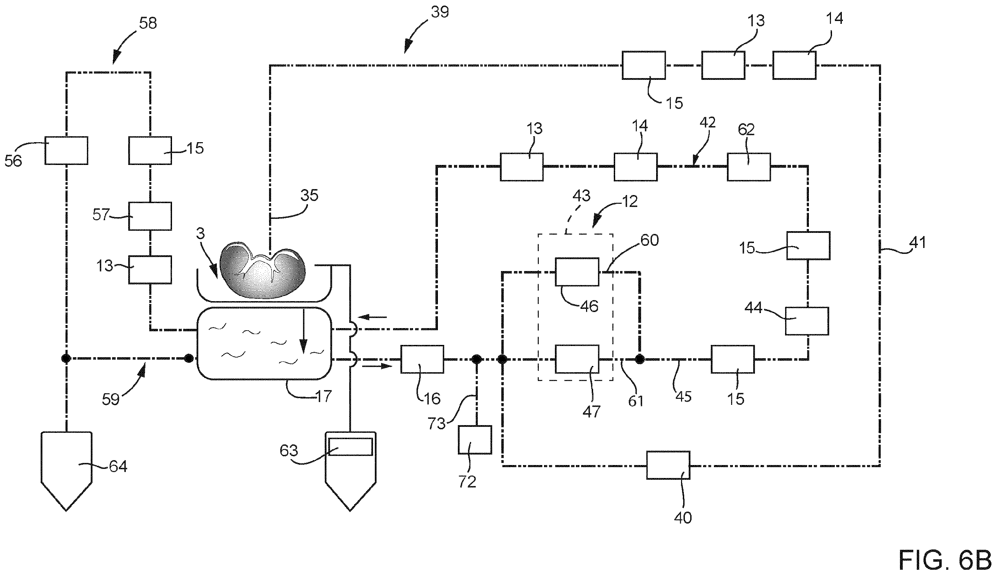

Figure 6B shows an alternative embodiment of the treatment circuit for the renal perfusion shown in Figure 6A; unless otherwise indicated, common elements described in Figure 6A are indicated with the reference numbers in Figure 6B and therefore will not be described further below.

The system **1** further comprises a purification circuit **58,** which is configured to withdraw the perfusion liquid from the reservoir **17** by means of a pump similar to the first pump **40** of Figure 6A and 6B and indicated below with the reference number **57,** which is adapted to purify the perfusion liquid by means of a sorbent filter **56** and introduce it again into the reservoir **17** for subsequent perfusion operations by means of a pumping line **59.**

With reference to Figure 7, in the hepatic perfusion, the system **1** comprises a withdrawal line **48** which conveys the perfusion liquid from the reservoir **17** in a hepatic venous perfusion circuit **49** and thence in a hepatic arterial perfusion circuit **50.** The hepatic venous perfusion circuit **49** further comprises a pump system **51,** similar to the pump system **43** of Figures 6A-6B and comprising respective pumps **52, 53** similar to the pumps **46, 47** of Figures 6A-6B and, therefore, not described further below. In addition, the hepatic venous perfusion circuit **49** comprises a third pumping line **54,** adapted to connect the pump system **51** with the second connection means **37,** here connected to the port vein of the organ, so as to direct at least a part of the perfusion liquid withdrawn from the reservoir **17** towards the organ. The hepatic arterial perfusion circuit **50** comprises a fourth pumping line **55** and a pump **65,** similar to the first pump **40** of Figures 6A-6B and therefore not described further below. The arterial perfusion circuit **50** is arranged downstream of the oxygenator **68;** in particular, the pumping line **55** is configured to connect the arterial pump **65** to the first connection means **36,** here connected to the hepatic artery of the organ, so as to direct a further part, separated from the part introduced into the third pumping line **54,** of the perfusion liquid towards the organ.

The system **1** also comprises a purification circuit, similar to the purification circuit **58** of Figure 6B and indicated below with the same reference number; in addition, further common elements indicated in Figure 6B are indicated in Figure 7 with the same reference numbers. In particular, the purification circuit **58** is configured to withdraw the perfusion liquid from the reservoir **17** by means of a pump **57,** which is adapted to purify the perfusion liquid by means of a sorbent filter **56** and introduce it again into the reservoir **17** for subsequent perfusion operations by means of a fifth pumping line **59.**

In the case of the renal perfusion, the organ, arranged and carried on the tray **20,** is connected to the first pumping line **41** by means of the first connection means **35.** In the case of the hepatic perfusion, the organ, arranged and carried on the tray **20,** is connected to the third pumping line **54** and to the fourth pumping line **55** respectively by means of the first and second connection means **36, 37.**

Subsequently, the user sets perfusion and treatment parameters **pⱼ,** which comprise treatment time parameters **pₜⱼ,** flow parameters Φⱼ and pressure parameters **prⱼ,** relative to the perfusion liquid and to the perfusion mode it is intended to be performed; furthermore, in this step, further parameters relative to the oxygenation and purification of the perfusion liquid can be set if the user wishes to perform oxygenation and/or purification operations. The treatment time parameters **pₜⱼ** are relative to the desired duration for the treatment; the maximum limit for the duration of the treatment of the organ is equal to 6 hours. The pressure parameters **prⱼ** comprise parameters relative to the hepatic and renal arterial perfusion (measured in mmHg) and to the hepatic venous perfusion and are indicative of the systolic pressure that must be reached and maintained during the renal artery, hepatic artery or hepatic vein perfusion respectively in the case of renal perfusion and hepatic perfusion. The flow parameters **Φⱼ** comprise: parameters relative to the maximum arterial perfusion flow (measured in mL/min), indicative of the maximum flow that can be achieved, at arterial perfusion pressure set, during the perfusion of the renal artery or of the hepatic artery respectively during the renal perfusion and the hepatic perfusion; and parameters relative to the oxygenation flow (measured in mL/min), indicative of the movement flow of the perfusion liquid through the oxygenator and parameters relative to the purification flow (measured in mL/min), indicative of the movement flow of the perfusion liquid through the sorbent filter **56.**

Once parameters are set, the system **1** performs the perfusion operations, which are described below with reference to the renal perfusion (Figure 6A-6B) and to the hepatic perfusion (Figure 7).

With reference to Figure 6A, in the perfusion of the organ, the first pump **40** withdraws the perfusion liquid from the reservoir **17** by means of the first pumping line **41;** in particular, before being brought to the first pump **40,** the level sensor **16** constantly monitors the amount of perfusion liquid contained in the reservoir **17,** so that the amount of perfusion liquid is maintained above a certain level (for example, defined by the user before the start of the renal perfusion operations) and, therefore, avoiding the possible entry of air into the first pumping line **41** in the organ during the renal perfusion. Should there be any air bubbles, the electronic control unit **9** generates a notification, for example audible, based on the monitoring by the level sensor **16.** It should be noted that the presence of air bubbles does not cause a stop in the flow of the perfusion liquid, which is therefore able to continue flowing in the first pumping line **41.**

The first pump **40,** when the perfusion liquid reaches it, is designed to modify the flow of the perfusion liquid by rotating its rotor, so that this flow has a sinusoidal trend with pulsatility peaks impressed by the rotation of the first rotor of the first pump **40.** In greater detail, the rotation speed of the first rotor of the first pump **40** is not constant over time, as it varies as a function of the flow parameters **Φⱼ** and, in particular, of the pressure parameters **prⱼ** set; in this way, the arterial renal perfusion is performed under controlled pressure.

Subsequently, the perfusion liquid with modified flow flows along the first pumping line **41;** in particular, the perfusion liquid flows towards a pressure sensor **15,** which is configured to measure with precision the pressure of the perfusion liquid entering the next sorbent filter **56,** if the perfusion liquid purification option has been selected at the beginning. In fact, if the purification option has also been selected in the settings of the initial parameters **pᵢ,** the perfusion liquid with modified flow is directed towards the sorbent filter **56,** so as to absorb any unwanted bodies or elements (for example, inflammation mediators, pro- and anti-inflammatory cytokines, bilirubin and myoglobin.

Subsequently, before reaching the organ, the perfusion liquid flows towards a further pressure sensor **15,** which is designed to measure the pressure of the perfusion liquid with modified flow; based on the data generated by the measurement by the pressure sensor **15** and transmitted to the electronic control unit **9,** which verifies that the measurement detected by the pressure sensor **15** corresponds to the pressure value set by the pressure parameters **prⱼ.** If this pressure value does not correspond, the electronic control unit **9** will generate a corresponding electrical command signal adapted to modify the rotation speed of the first pump **40.** This pressure sensor **15** arranged along the first pumping line **41** therefore allows to monitor the pressure of the perfusion liquid with modified flow so that it is verified that its value corresponds to the set values. This perfusion pressure measured by the pressure sensor **15** represents the perfusion pressure in input to the organ, which is such as to guarantee a substantially physiological and controlled perfusion under pressure. If this pressure value does not correspond, the electronic control unit 9 will generate corresponding electrical command signals adapted to modify the rotation speed of the first pump **40.**

The perfusion liquid with modified flow is then directed towards a flow and air presence sensor **14,** which verifies for any presence of air bubbles; in particular, in the presence of air bubbles, the flow and air presence sensor **14** generates corresponding data relative to parameters indicative of the presence of air bubbles, which are transmitted to the electronic control unit **9,** the latter designed to generate a notification, for example audible, as a function of the aforesaid data. Also in this case, the notification does not result in a stop of the flow of the perfusion liquid.

A temperature sensor **13,** arranged in series to the pressure sensor **15** and along the first pumping line **41,** before the organ, monitors the temperature of the perfusion liquid with modified flow so that it verifies, by means of the electronic control unit **9,** that the values correspond to the values set by the temperature parameters **Tᵢ.** If this temperature value does not correspond to the preset values, the electronic control unit **9** will generate corresponding electrical command signals adapted to command the thermoregulation system **6** to increase or decrease the temperature of the thermoregulation plate **7** and, therefore, of the perfusion liquid.

At this point, by means of the first pumping line **41,** the perfusion liquid with modified flow reaches the first connection means **35** and, therefore, the organ.

The perfusion liquid with modified flow thus pumped is then expelled from the organ itself by means of the renal venous system of the latter (and, therefore, towards the outside of the organ), in particular towards the reservoir **17;** in other words, the expelled perfusion liquid with modified flow, also indicated below as perfused liquid, outflows from the tray **20.** Then, due to the force of gravity, the perfused liquid passes through the support portion **31** of the tray **20** and is reintroduced into the reservoir **17.**

At the same time or after the aforesaid step of arterial renal perfusion, the perfusion liquid, optionally mixed with the perfused liquid, is withdrawn from the pump system **43** by means of the second pumping line **45;** in particular, the second pumping line **45** is first branched into a first and a second branch **60, 61,** respectively connected to the second and to the third pump **46, 47.** Therefore, the perfusion liquid withdrawn is simultaneously subdivided into a first and a second portion and directed towards the second and the third pump **46, 47,** which, similarly to the first pump **40,** modify the flow of the first and respectively of the second portion of the perfusion liquid so that they each have a sinusoidal trend with pulsatility peaks impressed by the respective rotors of the second and the third pump **46, 47.**

The first and second portion with modified flows are then directed again towards the second pumping line **45** (in particular, towards a pressure sensor **15** of the oxygenation circuit **42),** i.e. the branches **60, 61** are rejoined; in this way, the first and second portion are mixed to generate again the perfusion liquid, so that the respective sinusoidal trends with respective pulsatility peaks of the first and second portion are added together to obtain a modified flow, in particular with a sinusoidal trend with damped pulsatility peaks. In fact, the asynchrony between the second and third pump **46, 47** allows to apply different pulsatility to the first and second portion and, therefore, to obtain, once rejoined, a perfusion liquid with modified flow and, at the same time, with a pulsatility given by the sum between the pulsatility of the first and second portion, which partially compensate one another; having assumed that the offset angle **α** is comprised between 45° and 90°, the pulsatility of the perfusion liquid with damped pulsatility is damped by a percentage equal to about 50%.

Subsequently, the pressure sensor **15** monitors the values of the pressure of the perfusion liquid with damped pulsatility so that it is verified, by means of the electronic control unit **9,** that they correspond to the pressure value set by the pressure parameters **prⱼ,** in particular by measuring the pressure value of the perfusion liquid and by generating corresponding data, which are transmitted to the electronic control unit **9,** the latter designed to compare the measurement detected by the pressure sensor 15 with the values of the pressure parameters **prⱼ.** If this pressure value does not correspond, the electronic control unit **9** will generate a corresponding electrical command signal adapted to modify the rotation speed of the second and third pump **46, 47,** for example by stopping them if there is overpressure.

Subsequently, if an oxygenation step is envisaged, the perfusion liquid with damped pulsatility is oxygenated by means of the oxygenator **44,** the latter connected to a gas line (not shown), for example a biomedical tube with antibacterial filter included).

Then, the perfusion liquid with damped flow is first directed towards a pressure sensor **15,** adapted to measure the pressure of the perfusion liquid with damped flow following oxygenation and to verify that the value of this pressure corresponds to the value imposed by the pressure parameters **prⱼ;** if this verification gives a negative result, i.e. that the electronic control unit **9** determines that the measurement detected by the pressure sensor **15** and transmitted in the form of data to the electronic control unit **9** does not correspond to the values of the pressure parameters **prⱼ,** the electronic control unit **9** will generate corresponding electrical command signals adapted to modify the rotation speed of the second and third pump **46, 47,** for example by stopping them if there is overpressure.

Subsequently towards an arterial filter **62,** arranged along the second pumping line **45** and in particular interposed between the oxygenator **44** and a flow and air presence sensor **14,** adapted to eliminate particulates and any microbubbles. Subsequently, the perfusion liquid with damped pulsatility is conveyed towards the flow and air presence sensor **14,** which monitors the presence of any air bubbles in the perfusion liquid.

The perfusion liquid with damped pulsatility is received and pumped towards the reservoir **17;** in particular, before reaching the reservoir **17,** a temperature sensor **13** is designed to detect the temperature of the perfusion liquid with damped pulsatility and generate corresponding data, which are transmitted to the electronic control unit **9.** If this temperature value does not correspond to the preset values, the electronic control unit **9** will generate corresponding electrical command signals adapted to command the thermoregulation system **6** to increase or decrease the temperature of the thermoregulation plate **7** and, therefore, of the perfusion liquid with damped pulsatility.

Finally, the perfusion liquid with damped pulsatility is reintroduced into the reservoir **17,** so that it can be used again for subsequent perfusion operations.

In the case of the renal perfusion, the first collection means **63,** for example an additional container, are directly connected to the organ and are configured to collect a fluid, such as urine, produced by the organ during the perfusion; in this way, the user can verify the viability of the organ, as well as its operating capabilities.

In addition, second collection means **64,** for example a further additional container, are connected to the second pumping line **45** and are configured to receive the perfusion liquid at the end of the organ perfusion procedure, i.e. they operate as a discharge at the end of the renal perfusion. It should be noted that the second collection means **64** are connected, by means of a corresponding collection line, to a corresponding valve (not shown) designed to be opened and closed, in particular upon the user's action or automatically upon command of the electronic control unit **9,** to divert the perfusion liquid and ensure that it flows entirely in the second collection means **64** or in the reservoir **17;** in particular, at the end of the perfusion procedure, the valve associated with the collection means **64** is opened so that the perfusion liquid is diverted towards the collection means **64** and not the reservoir **17.** In other words, the second collection means **64** are designed to receive the perfusion liquid discharged through the collection line when the valve is open.

With reference to Figure 6B, in the perfusion of the organ, the first pump **40** withdraws the perfusion liquid from the reservoir **17** by means of the first pumping line **41;** in particular, before being brought to the first pump **40,** the level sensor **16** constantly monitors the amount of perfusion liquid contained in the reservoir **17,** so that the amount of perfusion liquid is maintained above a certain level (for example, defined by the user before the start of the renal perfusion operations) and, therefore, avoiding the possible entry of air into the first pumping line **41** in the organ during the renal perfusion.

The first pump **40,** when the perfusion liquid reaches it, is designed to modify the flow of the perfusion liquid by rotating its rotor, so that this flow has a sinusoidal trend with pulsatility peaks impressed by the rotation of the first rotor of the first pump **40.** In greater detail, the rotation speed of the first rotor of the first pump **40** is not constant over time, as it varies as a function of the flow parameters **Φⱼ** and, in particular, of the pressure parameters **prⱼ** set; in this way, the arterial renal perfusion is performed under controlled pressure.

The perfusion liquid with modified flow is then directed towards a flow and air presence sensor **14,** which verifies for any presence of air bubbles; in particular, in the presence of air bubbles, the flow and air presence sensor **14** generates corresponding data, which are transmitted to the electronic control unit **9,** the latter designed to generate a notification, for example audible, as a function of the aforesaid data. Also in this case, the notification does not result in a stop of the flow of the perfusion liquid.

Subsequently, a temperature sensor **13,** arranged in series to the pressure sensor **15** and along the first pumping line **41,** before the organ, monitors the temperature of the perfusion liquid with modified flow so that it is verified, by means of the electronic control unit **9,** that it corresponds to the values set by the temperature parameters **Tᵢ.** If this temperature value does not correspond to the preset values, the electronic control unit **9** will generate corresponding electrical command signals adapted to command the thermoregulation system **6** to increase or decrease the temperature of the thermoregulation plate **7** and, therefore, of the perfusion liquid.

Subsequently, a pressure sensor **15** is designed to measure the pressure of the perfusion liquid with modified flow flowing along the first pumping line **41;** based on the data generated by the measurement by the pressure sensor **15** and transmitted to the electronic control unit **9,** which verifies that the measurement detected by the pressure sensor **15** corresponds to the pressure value set by the pressure parameters **prⱼ.** If this pressure value does not correspond, the electronic control unit **9** will generate a corresponding electrical command signal adapted to modify the rotation speed of the first pump **40.** Therefore, this pressure sensor **15** arranged along the first pumping line **41** allows to monitor the pressure of the perfusion liquid with modified flow so that it is verified that its value corresponds to the set values. This perfusion pressure measured by the pressure sensor **15** represents the perfusion pressure in input to the organ, which is such as to guarantee a substantially physiological and controlled perfusion under pressure. If this pressure value does not correspond, the electronic control unit 9 will generate corresponding electrical command signals adapted to modify the rotation speed of the first pump **40.**

At this point, by means of the first pumping line **41,** the perfusion liquid with modified flow reaches the first connection means **35** and, therefore, the organ.

The perfusion liquid with modified flow thus pumped is then expelled from the organ itself by means of the renal venous system of the latter (and, therefore, towards the outside of the organ), in particular towards the reservoir 17; in other words, the expelled perfusion liquid with modified flow, also indicated below as perfused liquid, outflows from the tray **20.** Then, due to the force of gravity, the perfused liquid passes through the support portion **31** of the tray **20** and is reintroduced into the reservoir **17.**

At the same time or after the aforesaid step of arterial renal perfusion, the perfusion liquid, optionally mixed with the perfused liquid, is withdrawn from the pump system **43** by means of the second pumping line **45;** in particular, the second pumping line **45** is first branched into a first and a second branch **60, 61,** respectively connected to the second and to the third pump **46, 47.** Therefore, the perfusion liquid withdrawn is simultaneously subdivided into a first and a second portion and directed towards the second and the third pump **46, 47,** which, similarly to the first pump **40,** modify the flow of the first and respectively of the second portion of the perfusion liquid so that they each have a sinusoidal trend with pulsatility peaks impressed by the respective rotors of the second and the third pump **46, 47.**

The first and second portion with modified flows are then directed again towards the second pumping line **45** (in particular, towards a pressure sensor **15** of the oxygenation circuit **42),** i.e. the branches **60, 61** are rejoined; in this way, the first and second portion are mixed to generate again the perfusion liquid, so that the respective sinusoidal trends with respective pulsatility peaks of the first and second portion are added together to obtain a modified flow, in particular with a sinusoidal trend with damped pulsatility peaks. In fact, the asynchrony between the second and third pump **46, 47** allows to apply different pulsatility to the first and second portion and, therefore, to obtain, once rejoined, a perfusion liquid with modified flow and, at the same time, with a pulsatility given by the sum between the pulsatility of the first and second portion, which partially compensate one another; having assumed that the offset angle α is comprised between 45° and 90°, the pulsatility of the perfusion liquid with damped pulsatility is damped by a percentage equal to about 50%.

Subsequently, a pressure sensor **15** monitors the values of pressure of the perfusion liquid with damped pulsatility so that it is verified, by means of the electronic control unit **9,** that they correspond to the pressure value set by the pressure parameters **prⱼ,** in particular by measuring the pressure value of the perfusion liquid and by generating corresponding data, which are transmitted to the electronic control unit **9,** the latter designed to compare the measurement detected by the pressure sensor 15 with the values of the pressure parameters **prⱼ.** If this pressure value does not correspond, the electronic control unit **9** will generate a corresponding electrical command signal adapted to modify the rotation speed of the second and third pump **46, 47,** for example by stopping them if there is overpressure.

Subsequently, if an oxygenation step is envisaged, the perfusion liquid with damped pulsatility is oxygenated by means of the oxygenator **44,** the latter connected to a gas line (not shown), for example a biomedical tube with antibacterial filter included).

Then, the perfusion liquid with damped flow is first directed towards a pressure sensor **15,** adapted to measure the pressure of the perfusion liquid with damped flow following oxygenation and to verify that the value of this pressure corresponds to the value imposed by the pressure parameters **prⱼ;** if this verification gives a negative result, i.e. that the electronic control unit **9** determines that the measurement detected by the pressure sensor **15** and transmitted in the form of data to the electronic control unit **9** does not correspond to the values of the pressure parameters **prⱼ,** the electronic control unit **9** will generate corresponding electrical command signals adapted to modify the rotation speed of the second and third pump **46, 47,** for example by stopping them if there is overpressure. Subsequently towards an arterial filter **62,** arranged along the second pumping line **45** and in particular interposed between the oxygenator **44** and a flow and air presence sensor **14,** adapted to eliminate particulates and any microbubbles. Subsequently, the perfusion liquid with damped pulsatility is conveyed towards the flow and air presence sensor **14,** which verifies that there are no air bubbles in the perfusion liquid.

The perfusion liquid with damped pulsatility is received and pumped towards the reservoir **17;** in particular, before reaching the reservoir **17,** a temperature sensor **13** is designed to detect the temperature of the perfusion liquid with damped pulsatility and generate corresponding data, which are transmitted to the electronic control unit **9.** If this temperature value does not correspond to the preset values, the electronic control unit **9** will generate corresponding electrical command signals adapted to command the thermoregulation system **6** to increase or decrease the temperature of the thermoregulation plate **7** and, therefore, of the perfusion liquid with damped pulsatility.

Finally, the perfusion liquid with damped pulsatility is reintroduced into the reservoir **17,** so that it can be used again for subsequent perfusion operations.

At the same time or after the aforesaid step of arterial renal perfusion, the perfusion liquid, optionally mixed with the perfused liquid, is withdrawn from the reservoir **17** by the pump **57** by means of the third pumping line **59;** in particular, the pump **57,** similarly to the first pump **40,** modifies the flow of the perfusion liquid so that it has a sinusoidal trend with pulsatility impressed by the rotor of the pump **57.** For example, the pump **57** is a peristaltic pump.

Before reaching the pump **57,** the perfusion liquid flows towards a temperature sensor **13,** along the third pumping line **59,** which monitors the temperature of the perfusion liquid so that it verifies, by means of the electronic control unit **9,** that the values correspond to the values set by the temperature parameters **Tᵢ.** If this temperature value does not correspond to the preset values, the electronic control unit **9** will generate corresponding electrical command signals adapted to command the thermoregulation system **6** to increase or decrease the temperature of the thermoregulation plate **7** and, therefore, of the perfusion liquid.

Subsequently, if the purification of the perfusion liquid is envisaged, the pump **57** directs the perfusion liquid with modified flow towards the sorbent filter **56,** which purifies the aforesaid perfusion liquid from any unwanted bodies or elements (for example, inflammation mediators, pro- and anti-inflammatory cytokines, bilirubin and myoglobin) . Before reaching the sorbent filter **56,** a pressure sensor **15,** adapted to measure the pressure of the perfusion liquid and to verify that the value of this pressure corresponds to the value imposed by the pressure parameters **prⱼ;** if this verification gives a negative result, i.e. that the electronic control unit **9** determines that the measurement detected by the pressure sensor **15** and transmitted in the form of data to the electronic control unit **9** does not correspond to the values of the pressure parameters **prⱼ,** the electronic control unit **9** will generate corresponding electrical command signals adapted to modify the rotation speed of the pump **57,** for example by stopping it if there is overpressure. The perfusion liquid with modified flow and thus purified is directed towards the reservoir **17** by means of the third pumping line **59,** so that it can be reused for subsequent perfusion operations.

In the case of the renal perfusion, the first collection means **63,** for example an additional container, are directly connected to the organ and are configured to collect a fluid, such as urine, produced by the organ during the perfusion; in this way, the user can verify the viability of the organ, as well as its operating capabilities.

Furthermore, second collection means, here indicated with the reference number **64,** for example a further additional container, connected to the third pumping line **59** and are configured to receive the perfusion liquid drained (i.e. discharged) and purified by the sorbent filter **56.** It should be noted that the second collection means **64** are connected, by means of a corresponding collection line, to a corresponding valve (not shown) designed to be opened and closed, in particular upon the user's action or automatically upon command of the electronic control unit **9,** to divert the perfusion liquid and ensure that it flows entirely in the second collection means **64** or in the reservoir **17;** in particular, at the end of the perfusion procedure, the valve associated with the collection means **64** is opened so that the perfusion liquid is diverted towards the collection means **64** and not the reservoir **17.** In other words, the second collection means **64** are designed to receive the perfusion liquid discharged through the collection line when the valve is open.

With reference to Figure 7, in the hepatic perfusion, the perfusion liquid is withdrawn from the reservoir **17** by means of the withdrawal line **48** in order to be able to be directed towards the hepatic venous perfusion circuit **49** and/or the hepatic arterial perfusion circuit **50,** so as to perform a double perfusion of the organ; before reaching the perfusion circuits **49, 50,** a level sensor **16** constantly monitors the amount of perfusion liquid contained in the reservoir **17,** so that the amount of perfusion liquid is maintained above a certain level (for example, defined by the user before the start of the hepatic perfusion operations) and, therefore, avoiding the possible entry of air into the withdrawal line **48** during the hepatic perfusion.

Consequently, the perfusion liquid flows towards the perfusion circuits **49, 50.**

In the case of hepatic venous perfusion, in a manner similar to what has been discussed with reference to the arterial renal perfusion, the perfusion liquid is withdrawn from the pump system **51** by means of a withdrawal line **48,** which branches into respective branches **66, 67,** respectively connected to the second and third pump **52, 53.** Therefore, the perfusion liquid withdrawn is subdivided into the first and second portion and directed towards the second and third pump **52, 53,** which modify the flow of the first and respectively second portion, so that they each have a sinusoidal trend with pulsatility peaks impressed by the respective rotors of the second and third pump **52, 53.**

The first and second portion with modified flows are directed towards the first pumping line **54** (in particular, towards a pressure sensor **15** of the perfusion circuit **49**), i.e. the branches **66, 67** are rejoined, so that the sinusoidal trends of the first and second portion of the perfusion liquid are added together to obtain again the perfusion liquid, which has a sinusoidal trend with damped pulsatility peaks, in a manner similar to what has been discussed with reference to the pump system **43** of Figure 6.

Subsequently, the pressure sensor **15** is designed to measure the pressure of the perfusion liquid with modified flow; based on the data generated by the measurement by the pressure sensor **15** and transmitted to the electronic control unit **9,** which verifies that the measurement detected by the pressure sensor **15** corresponds to the pressure value set by the pressure parameters **pr₃.** If this pressure value does not correspond, the electronic control unit **9** will generate a corresponding electrical command signals adapted to modify the rotation speed of the second and third pump **52, 53** of the pump system **51,** for example by stopping them if there is overpressure.

Subsequently, if the oxygenation of the perfusion liquid is envisaged, the perfusion liquid with damped pulsatility is oxygenated by means of an oxygenator **68** similar to the oxygenator **44** of Figure **6****;** in particular, the oxygenator **68** is connected to a gas line (not shown) in a manner similar to what has been discussed with reference to the renal perfusion described with reference to Figures 6A-6B.

Thus, a flow and air presence sensor **14,** a temperature sensor **13** and a pressure sensor **15** are designed to monitor the flow, temperature and pressure values of the perfusion liquid with damped pulsatility so that it is verified, by means of the electronic control unit **9** and in a manner similar to what has been discussed above, that they correspond to the pressure, flow and temperature values set by the pressure **pr₃,** flow **Φᵢ** and temperature **Tᵢ** parameters. If this pressure, flow and temperature value do not correspond, the electronic control unit **9** will generate corresponding electrical command signals adapted to modify the rotation speed of the second and third pump **52, 53** of the pump system **51,** for example by stopping them if there is overpressure, and to command the thermoregulation system **6** to regulate the temperature of the thermoregulation plate **7.**

It should be noted that, along the third pumping line **54,** in particular between the flow and air presence sensor **14** and the oxygenator **68,** there is provided an arterial filter **69** similar to the arterial filter shown in Figure 6 and operating under the same modes. It should also be noted that, at the outlet of the arterial filter **69,** there is a branch towards the second pumping line **55,** managed by the arterial pump **65** and dedicated to the arterial hepatic perfusion.

Subsequently, the perfusion liquid with damped pulsatility is directed, by means of the first pumping line **54,** towards the second connection means **37** and, therefore, the organ.

In the case of arterial perfusion and in a manner similar to what has been described with reference to the renal perfusion, the perfusion liquid is withdrawn, as described above, past the arterial filter **69** and is directed towards a fourth pump **65,** similar to the first pump **40** of Figure 6A and therefore not described further below, which modifies the flow of the perfusion liquid so that it has a sinusoidal trend with a pulsatility impressed by the rotation of the rotor of the fourth pump **65,** thus obtaining a perfusion liquid with modified flow.

Subsequently, the perfusion liquid with modified flow is directed towards the first connection means **36** and, therefore, towards the organ by means of the fourth pumping line **55;** before reaching the organ, a flow and air presence sensor **14,** a temperature sensor **13** and a pressure sensor **15** are designed to monitor the flow, temperature and pressure values of the perfusion liquid so that it is verified, by means of the electronic control unit **9** and in a manner similar to what has been discussed above, that they correspond to the pressure, flow and temperature values set by the pressure **pr₃,** flow **Φᵢ** and temperature **Tᵢ** parameters. If this pressure, flow and temperature value do not correspond, the electronic control unit **9** will generate corresponding electrical command signals adapted to modify the rotation speed of the fourth pump **65,** for example by stopping them if there is overpressure, and to command the thermoregulation system **6** to regulate the temperature of the thermoregulation plate **7.**

The perfusion liquid with modified flow coming from the second pumping line **55** and the perfusion liquid with damped pulsatility coming from the first pumping line **54** thus pumped of the organ are then drained as perfused liquid by means of the suprahepatic venous system of the organ (and, therefore, towards the outside of the organ), in particular towards the reservoir **17;** in other words, the perfused liquid outflows on the tray **20.** Then, due to the force of gravity, the perfused liquid passes through the support portion **31** of the tray **20** and is reintroduced into the reservoir **17.**

Simultaneously with the steps of hepatic venous perfusion and/or hepatic arterial perfusion, the perfusion liquid, optionally mixed with the perfused liquid, is withdrawn from the reservoir **17** by the pump **57** by means of the third pumping line **59;** in particular, the pump **57,** similarly to the first renal perfusion pump **40** described with reference to Figure 6, modifies the flow of the perfusion liquid so that it has a sinusoidal trend with pulsatility impressed by the pump rotor **57.** For example, the pump **57** is a peristaltic pump.

Before reaching the pump **57,** the perfusion liquid flows towards a temperature sensor **13,** along the third pumping line **59,** which monitors the temperature of the perfusion liquid so that it verifies, by means of the electronic control unit **9,** that the values correspond to the values set by the temperature parameters **Tᵢ.** If this temperature value does not correspond to the preset values, the electronic control unit **9** will generate corresponding electrical command signals adapted to command the thermoregulation system **6** to increase or decrease the temperature of the thermoregulation plate **7** and, therefore, of the perfusion liquid.

Subsequently, if the purification of the perfusion liquid is envisaged, the pump **57** directs the perfusion liquid with modified flow towards the sorbent filter **56,** which purifies the aforesaid perfusion liquid from any unwanted bodies or elements (for example, inflammation mediators, pro- and anti-inflammatory cytokines, bilirubin and myoglobin) . Before reaching the sorbent filter **56,** a pressure sensor **15,** adapted to measure the pressure of the perfusion liquid and to verify that the value of this pressure corresponds to the value imposed by the pressure parameters **prⱼ;** if this verification gives a negative result, i.e. that the electronic control unit **9** determines that the measurement detected by the pressure sensor **15** and transmitted in the form of data to the electronic control unit **9** does not correspond to the values of the pressure parameters **prⱼ,** the electronic control unit **9** will generate corresponding electrical command signals adapted to modify the rotation speed of the pump **57,** for example by stopping it if there is overpressure. The perfusion liquid with modified flow and thus purified is directed towards the reservoir **17** by means of the third pumping line **59,** so that it can be reused for subsequent perfusion operations.

The perfusion liquid with modified flow and thus purified is directed towards the reservoir **17** by means of the fifth pumping line **59,** so that it can be reused for subsequent perfusion operations.

In the case of the hepatic perfusion, the first collection means, here indicated with the reference number **70,** for example an additional container, is connected to the organ (in particular at the bile duct) and is configured to collect the bile produced by the organ during the perfusion; in this way and in a manner similar to what has been discussed with reference to Figures 6A and 6B, the user can verify the viability of the organ, as well as its operating capabilities.

Furthermore, second collection means, here indicated with the reference number **71,** for example a further additional container, connected to the fifth pumping line **59** and are configured to receive the discharged perfusion liquid and purified by the sorbent filter **56.** It should be noted that the second collection means **71** are connected, by means of a corresponding collection line, to a corresponding valve (not shown) designed to be opened and closed upon the user's action or automatically upon command of the electronic control unit **9** to divert the perfusion liquid and ensure that it flows entirely in the second collection means **71** or in the reservoir **17;** in particular, at the end of the perfusion procedure, the valve associated with the collection means **71** is opened so that the perfusion liquid is diverted towards the collection means **71** and not the reservoir **17.** In other words, the second collection means **71** are designed to receive the perfusion liquid discharged through the collection line when the valve is open.

At the end of the hepatic or hepatic perfusion operations, the system **1** is deactivated (i.e., the pumps **40, 46, 47, 52, 53, 65** and **57** do not withdraw again the perfusion liquid and it is waited for the perfusion liquid to be completely discharged in the second collection **63, 71)** and the first and/or second connection means **35-37** are disconnected, so as to free the organ, which is then withdrawn from the container **3** for possible and subsequent transplant operations.

The *ex vivo* perfusion system **1** further comprises infusion lines **73, 75** designed to connect corresponding infusion reservoirs **72, 74** to the perfusion circuit **39** in the case of renal perfusion (Figures 6A and 6B) and to the withdrawal line **48** connected to the perfusion circuits **49, 50** in the case of hepatic perfusion (Figure 7). In particular, the infusion reservoirs **72, 74** are designed to contain a further perfusion liquid, different from the aforementioned perfusion liquid; as also better described below, the infusion lines **73, 75** are provided with respective valves (not shown), designed to open and close, in particular upon the user's action or automatically upon command of the electronic control unit **9,** so as to allow the infusion of the further perfusion liquid into the perfusion circuits **39, 49, 50** upon command of the electronic control unit **9.** In particular, the infusion lines **73, 75** are designed to convey the further perfusion liquid respectively in the perfusion circuit **39** in the case of renal perfusion in the configuration described in Figure 6A, in the oxygenation circuit **42** in the case of renal perfusion in the configuration described in Figure 6B and in the withdrawal line **48** in the case of hepatic perfusion (Figure 7) upon the user's action or automatically upon command of the electronic control unit **9.** It should be noted that the aforesaid valves are coupled to respective sensors and actuators (not shown), connected to the electronic control unit **9** and designed to monitor amounts relative to the perfusion liquid, for example pressure and flow; these amounts are transmitted as data to the electronic control unit **9,** which can command the valves upon the user's action or automatically upon command of the electronic control unit **9** through the user interface **8** to open or close as a function of the data received from the sensors and from the actuators.

A method to exchange the perfusion liquids with the further perfusion liquid (indicated below respectively as first and second perfusion liquid) contained in the infusion reservoirs **72, 74** is now described; as also described in greater detail below, the present exchange method allows to switch from a hypothermic mode to a sub- and normothermic mode continuously and automatically, without having to remove the organ from the container **3** at the gradual increase in temperature, thus performing a perfusion according to the modes described in the previous paragraphs. In parallel to the automated management of the thermal mode, by way of example, it should be noted that this exchange method provides for the gradual increase of the temperature from 4°C to 37°C, thus allowing a manual or automatic management (the latter, for example, by means of the electronic control unit **9**) also of the perfusion parameters (in particular, the maximum perfusion pressures) without an intervention by a user.

In particular, the present exchange method comprises the steps of:
In particular, the method sequentially comprises the steps of:
a) perfusing the organ with an initial amount of the first perfusion liquid by means of the perfusion circuit **39, 49, 50;**
b) during the perfusion of the organ with the first perfusion liquid, draining a first amount of the first perfusion liquid so as to reduce the amount of the first perfusion liquid in the perfusion circuit;
c) during the perfusion of the organ with the first perfusion liquid, replacing the amount of the first perfusion liquid in the perfusion circuit with an equal amount of the second perfusion liquid; and
d) continuing the perfusion of the organ with the second perfusion liquid.

The method further comprises the step of e) adding cells, e.g. red blood cells, substances, such as albumin, and/or drugs, e.g. antibiotics to the second perfusion liquid. In particular, according to an aspect of the present invention, the aforesaid components can be added both inside the infusion reservoirs **72, 74** and through injection points in the perfusion circuits **39, 49, 50** of the *ex vivo* perfusion system **1.**

It should be noted that, starting from step a), the temperature of the thermoregulation plate **7** is gradually increased so that it is switched from hypothermia (i.e., in the temperature interval comprised between 4°C and 12°C) of step a) up to a temperature approximately equal to 25°C (step e)). In other words, from step a) to step e), the temperature of the perfusion liquid is increased simultaneously with the aforementioned steps.

Once step e) is ended, the perfusion liquid present in the perfusion circuit **39, 49, 50** is at a temperature approximately equal to 25°C, i.e. it is suitable for the sub- and normothermic conditions; subsequently, the method comprises a step of f) modifying parameters of the second perfusion liquid in the perfusion circuit **39, 49, 50.** In particular, the parameters relate to the temperature, pressure and flow of the second perfusion liquid and are modulated so that they are equal to predefined values, i.e. equal to the perfusion parameters typical of sub- and normothermic conditions; in particular, in terms of temperature, the second perfusion liquid is brought to a temperature equal to 37°C.

As anticipated above, step a) is also defined below as a step of hypothermic perfusion wherein the first perfusion liquid, also defined below as PumpProtect, is an acellular solution (e.g. a physiological-like solution added with salts and metabolites). In this step, it is assumed that for example 3 L of first perfusion liquid are present in the ex *vivo* perfusion system **1.**

According to an aspect of the present invention, the second perfusion liquid, also defined below as Emagel, is for example a colloidal base, here polygeline, used for suband normothermic perfusions, i.e. for perfusions from 16-18°C up to 37°C.

With reference to step b), the temperature of the first perfusion liquid is increased, for example from 4°C up to 16-18°C. Once this temperature has been reached, a predefined amount of the first perfusion liquid, for example 2 L, is discharged into the collection means **64, 71** (in particular, by opening the valve associated with the collection means **64, 71)** to ensure that within the perfusion circuits **39, 49, 50** of the *ex vivo* perfusion system **1** there is the first amount of first perfusion liquid, for example equal to 1 L.

Subsequently, step c) provides that a first amount of the second perfusion liquid is introduced into the *ex vivo* perfusion system **1** by means of the infusion lines **73, 75** and that a corresponding second amount of the first perfusion liquid is drained into the collection means **64,71.** It should be noted that the perfusion of the organ proceeds simultaneously with the aforesaid infusion and drainage operations; in this way, during the infusion and drainage procedures, within the perfusion circuits **39, 49, 50** of the *ex vivo* perfusion system **1** there is a mixture comprising the first and second perfusion liquid, also defined as the third perfusion liquid. In other words, the organ is perfused with the third perfusion liquid during the introduction and drainage procedures, wherein the amount of first perfusion liquid decreases as the time passes by because of the drainage procedure and the amount of second perfusion liquid increases as the time passes by because of the introduction procedure. In particular, the introduction of the second perfusion liquid and the drainage of the first perfusion liquid take place according to respective flows such that, when such a replacement operation is carried out, the organ is not subjected to an overpressure condition that could compromise it.

Therefore, the aforesaid step b) comprises the steps of:
- opening the valve associated with the collection means **64, 71;** and
- draining the first amount of the first perfusion liquid in the collection means **64, 71.**

Step b) also comprises the steps of:
- determining a time interval wherein the first amount of first perfusion liquid drained is equal to a respective predefined value, for example 2 L; and
- determining that, when the time interval has elapsed, the first amount of first perfusion liquid drained is equal to the respective predefined value.

It should be noted that, in this step, the valves associated with the collection means **64, 71** remain open for the subsequent stages.

Step c) comprises the steps of:
- introducing the first amount of the second perfusion liquid into the perfusion circuit **39, 49, 50** of the *ex vivo* perfusion system **1** according to a first flow, indicated below as Q_{inf}, which is equal, for example, to 300 mL/min; and
- draining the second amount of the first perfusion liquid during the introduction of the first amount of the second perfusion liquid into the collection means **64, 71** of the *ex vivo* perfusion system **1** according to a second flow, indicated below as Qₒᵤₜ, which is equal, for example, to 300 mL/min.

Step c) also comprises the steps of:
- determining a time interval wherein the amount of first perfusion liquid drained and the amount of second perfusion liquid infused are at least the same, for example 1 L;
- determining that, when the time interval has elapsed, the amount of first perfusion liquid drained and the amount of second perfusion liquid infused are the same; and
- closing the valves associated with the collection means **64, 71** and the infusion line **73, 75.**

In particular, step c) follows a trend listed in Table 1, reported below, and explained in the following paragraphs.

**Table 1**

| m i n | Pump Protect t₀ (mL) | Qₒᵤₜ (mL/mi n) | Q_{inf} (mL/mi n) | Mass Exchanged (mL) | Pump Protect (mL) | %Pump Protec t | Emage l (mL) | %Em age l | Red Cell (ml) | Drugs (ml) |
|---|---|---|---|---|---|---|---|---|---|---|
| | 1000 | 300 | 300 | 4500 | | | | | 700 | 500 |
| 0 | | | | | 1000 | | | | | |
| 1 | | | | | 700.00 | 70.0% | 300.0 0 | 30% | | |
| 2 | | | | | 490.00 | 49.0% | 510.0 0 | 51% | | |
| 3 | | | | | 343.00 | 34.3% | 657.0 0 | 66% | | |
| 4 | | | | | 240.10 | 24.0% | 759.9 0 | 76% | | |
| 5 | | | | | 168.07 | 16.8% | 831.9 3 | 83% | | |
| 6 | | | | | 117.65 | 11.8% | 882.3 5 | 88% | | |
| 7 | | | | | 82.35 | 8.2% | 917.6 5 | 92% | | |
| 8 | | | | | 57.65 | 5.8% | 942.3 5 | 94% | | |
| 9 | | | | | 40.35 | 4.0% | 959.6 5 | 96% | | |
| 1 0 | | | | | 28.25 | 2.8% | 971.7 5 | 97% | | |
| 1 1 | | | | | 19.77 | 2.0% | 980.2 3 | 98% | | |
| 1 2 | | | | | 13.84 | 1.4% | 986.1 6 | 99% | | |
| 1 3 | | | | | 9.69 | 1.0% | 990.3 1 | 99% | | |
| 1 4 | | | | | 6.78 | 0.7% | 993.2 2 | 99% | | |
| 1 5 | | | | | 4.75 | 0.5% | 995.2 5 | 100 % | | |
| t y | | | | | | | | | **700** | **500** |
| t z | | | | | | **0.2%** | | **45. 2%** | **31.8%** | **22.7%** |

In particular, it should be noted that:
- t₀ indicates the time instant wherein step b) of this method is ended, i.e. when part of the first perfusion liquid has been drained and the second perfusion liquid is about to be infused into the *ex vivo* perfusion system **1;**
- Pump Protect t₀ is the amount of the first perfusion liquid in the *ex vivo* perfusion system **1** at the time t₀;
- Pump Protect is the amount of the first perfusion liquid in the *ex vivo* perfusion system **1** at the time tₓ;
- %Pump Protect is the percentage of first perfusion liquid remaining in the *ex vivo* perfusion system **1** during its drainage;
- Emagel is the amount of second perfusion liquid infused into the *ex vivo* perfusion system **1** at the time tₓ; and
- %Emagel is the percentage of second perfusion liquid infused into the *ex vivo* perfusion system **1.**

It should also be noted that the infusion and drainage flows are assumed to be equal to Q_{inf} and Qₒᵤₜ, here equal to 300 mL/min.

Therefore, as also evident from Table 1, the increase in the amount of second perfusion liquid infused in the ex *vivo* perfusion system **1** corresponds to a decrease in the first perfusion liquid in the same *ex vivo* perfusion system **1.**

It should be noted that the time interval represents the period of time wherein the procedure of replacing the first perfusion liquid with the second perfusion liquid is completed; as also evident from Table 1, the time interval is approximately equal to fifteen minutes, considering t0 as the initial time instant of the aforesaid time interval, i.e. to 15 minutes from the beginning of step c) there is an amount of second perfusion liquid substantially equal to 100% and of first perfusion liquid substantially equal to 0%. In other words, in step c), the increase in the amount of second perfusion liquid corresponds to a decrease in the first perfusion liquid in the modes described above.

It should also be noted that the entry MassExchange in Table 1 indicates the first amount, expressed in mL, of second perfusion liquid infused into the *ex vivo* perfusion system **1** to allow the complete replacement of the first perfusion liquid with the second perfusion liquid, i.e. the amount of second perfusion liquid necessary for the second amount of first perfusion liquid to be completely drained in the collection means **64, 71.** By way of example, MassExchange is equal to 4500 mL, i.e. to replace 1 L of PumpProtect, 4.5 L of Emagel were needed at the end of step c) so that, in step e), there is 1 L of Emagel. In other words, in order to completely replace the first perfusion liquid, the present method provides that an amount of second perfusion liquid is inserted such as to allow the gradual replacement of the first perfusion liquid in the perfusion circuit **39, 49, 50;** in fact, during the gradual replacement, one will obtain that the collection means **64, 71** will contain both the first and the second perfusion liquid, since, by infusing the second perfusion liquid and by discharging the first perfusion liquid, while continuing the organ perfusion procedure, one will obtain that part of the second perfusion liquid will also be discharged into the collection means **64, 71.**

Therefore, at the end of step c), only the second perfusion liquid is present in the *ex vivo* perfusion system **1,** which is therefore used for organ perfusion (step d)).

Subsequently, at the time t_{z}, following the aforesaid time interval, step e) provides that the second perfusion liquid is added with elements such as red blood cells (in Table 1, Red Cells, here equal to 700 mL) and/or drugs (in Table 1, Drugs, here equal to 500 mL).

Therefore, at the instant t_{y}, the perfusion liquid present in the *ex vivo* perfusion system **1** will have the following composition:
- less than 0.2% of the total volume of the PumpProtect perfusion liquid;
- greater than 45.2% of the total volume of the Emagel perfusion liquid; and
- approximately equal to 54.5% of the total volume of the perfusion liquid of red blood cells, substances and/or drugs.

The perfusion liquid at the end of step e) is therefore suitable for perfusion under sub- and normothermic conditions; step f) thus follows with which the normothermic conditions are reached. As described with reference to Figure 1, step f) provides that there is a gradual and atraumatic rise in the temperature of the perfusion liquid from 22-25°C at which step e) ends to 37°C, which is accompanied by an increase in the maximum pressures set and consequently in the flows reached. For example, at the end of step e), one obtains a temperature of 25°C with a maximum arterial hepatic pressure of 25 mmHg and maximum venous hepatic pressure of 5 mmHg and with a maximum arterial renal pressure of 25 mmH. During step f) there is a gradual, manual or automatic rise in temperature and pressures, to arrive at the end of the procedure with a temperature of 37°C and a maximum arterial hepatic pressure of 70-80 mmHg and maximum venous hepatic pressure of 8-10 mmHg and with a maximum arterial renal pressure of 70-80 mmHg, which are the typical values at which normothermic perfusion can continue. It should be noted that also step f) takes place without the need to interrupt the perfusion of the organ. Once step f) is ended, the *ex vivo* perfusion system **1** is under physiological-like conditions (in particular, in terms of composition, temperature, pressure and flow of the perfusion liquid) and therefore the treatment of the organ can continue in normothermic mode.

According to an aspect of the present invention, the present method can be customized, that is, as a function of the type of organ, of the specific needs and of the clinical protocols used, it is possible to define parameters, in particular the volumes of the first and second perfusion liquid to be exchanged in the different thermal modes, the flows of first and second perfusion liquid to be drained and to be infused respectively and the time duration, in order to adapt the procedure for exchanging perfusion liquids for the specific application. In general, these parameters are defined so as not to compromise the organ to be perfused, i.e. so that there is no overpressure in the organ.

It should also be noted that what is described above represents an example of iteration between the aforementioned steps; according to a further aspect of the present invention, the aforesaid steps can be combined automatically as a function of the preset parameters (in particular, volumes of the first and second perfusion liquid and clinical protocols) by means of the electronic control unit **9** (for example, by opening and closing the aforementioned valves automatically as the temperature increases) or, alternatively, manually selected by a user through the user interface **8.**

The customization is also based on the possibility of being able to choose the option of exchanging the perfusion liquid and the start and end temperature for the perfusion of the organ to be perfused, in particular in the interval from 4°C to 37°C.

It should also be noted that steps a)-e) take place without the perfusion of the organ being interrupted in any of the above-indicated steps; in addition, it should be noted that these steps take place simultaneously with an increase in the temperature of the perfusion liquid contained in the reservoir **17,** i.e. the thermoregulation system **6** modifies the temperature of the perfusion liquid in the reservoir **17** according to the modes described above and automatically, for example following a thermoregulation profile, or upon command by the user through the user interface **8.**

It should be further noted that, according to an aspect of the present invention, the duration of steps a)-f) depends on the amount of first perfusion liquid to be drained, i.e. the greater the amount of first perfusion liquid to be drained is the greater the time and the amount of second perfusion liquid to be infused is to allow the complete replacement of the first perfusion liquid with the second perfusion liquid.

It should also be noted that what is described above is related to a procedure of perfusion under pressure, that is, wherein, once the pressure is set, there is a variation in the flows of perfusion liquids, in particular a gradual increase in the latter; according to a further aspect of the present invention, the perfusion can also be in flow, that is, once the flow of the perfusion liquid is set and considering the amount of perfusion liquid necessary to have the correct perfusion of the organ, there is a variation in the pressure of the perfusion liquid, in particular a gradual decrease in the latter.

The present method has several advantages.

In particular, the present method allows to avoid static ischemia, since the perfusion of the organ is not interrupted to exchange the first perfusion liquid with the second perfusion liquid but it proceeds in parallel to the replacement of the first perfusion liquid with the second perfusion liquid.

Furthermore, the present method is easily customizable in order to allow the adequate perfusion of the organ and the exchange of the first perfusion liquid with the second perfusion liquid efficiently and effectively.

In addition, the present method is simple to implement and can be easily automated.

Finally, it is evident that modifications and variations can be made to the invention described and illustrated herein without, however, departing from the scope of the present invention, as defined in the appended claims.

For example, the present method can also be applied for further organs besides the liver and the kidney, for example to a lung block.

Furthermore, this method can also be applied in the event that the perfusion takes place from the sub- and normothermic mode to the hypothermic mode, i.e. by decreasing the temperature (for example, switching from 37°C to 4°C). In this case, the aforesaid parameters are regulated so as to allow an efficient and effective replacement of the perfusion liquids. Furthermore, in such a case, there is the drainage of the second perfusion liquid, e.g. Emagel, and the infusion of the first perfusion liquid, e.g. PumpProtect.

In a method outside the scope of the present claims, the disclosed system can also be applied in the event that it is wished to refresh the perfusion liquid already present in the *ex vivo* perfusion system, i.e. to replace part or the totality of the perfusion liquid without necessarily having a consequent increase in temperature and to allow an efficient perfusion of the organ to be perfused.

## Claims

1. An exchange method for perfusion liquids for perfusing an organ through an *ex vivo* perfusion system **(1);**
the *ex vivo* perfusion system **(1)** comprising:
- a container **(3)** for an organ to be perfused, the container **(3)** comprising a first reservoir **(17)** initially containing a first perfusion liquid;
- a perfusion circuit **(39, 49, 50)** fluidically connected to the first reservoir **(17)** to perfuse the organ with the first perfusion liquid;
- collection means **(64, 71)** configured to receive the first perfusion liquid at the end of the perfusion; and
- a feed line **(73, 75)** designed to connect a second reservoir **(72, 74)** containing a second perfusion liquid different from the first perfusion liquid to the perfusion circuit **(39,49, 50),**
wherein the feed line **(73, 75)** is provided with a valve designed to be opened and closed so as to allow the second perfusion liquid to be introduced into the perfusion circuit **(39, 49, 50),**
the *ex vivo* perfusion system **(1)** further comprising a thermoregulation system **(6),** coupled to a thermoregulation plate **(7),** and wherein the thermoregulation plate **(7)** is adapted to carry the container **(3)** and to rewarm or cool thanks to the thermoregulation system **(6)** for rewarming or cooling the perfusion liquid contained in the container **(3),**
wherein
the method sequentially comprises the steps of:
a) perfusing the organ with an initial amount of the first perfusion liquid by means of the perfusion circuit **(39, 49, 50);**
b) during the perfusion of the organ with the first perfusion liquid, draining a first amount of the first perfusion liquid so as to reduce the amount of the first perfusion liquid in the perfusion circuit;
c) during the perfusion of the organ with the first perfusion liquid, replacing the amount of the first perfusion liquid in the perfusion circuit with an equal amount of the second perfusion liquid; and
d) continuing the perfusion of the organ with the second perfusion liquid,
wherein, starting from step a), the temperature of the thermoregulation plate **(7)** is gradually increased to pass from hypothermia to sub- and normothermia.

2. The exchange method for perfusion liquids for perfusing an organ through an *ex vivo* perfusion system **(1)** according to claim **1** and further comprising the step of e) adding cells, substances and/or drugs to the second perfusion liquid.

3. The exchange method for perfusion liquids for perfusing an organ through a perfusion system *ex vivo* **(1)** according to any one of the preceding claims, wherein the collection means **(64, 71)** are provided with a valve designed to be opened and closed so as to divert the perfusion liquid and cause it to flow entirely into the second collection means **(64, 71)** and wherein step b) comprises the steps of:
- opening the valve associated with the collection means **(64, 71);** and
- draining the first amount of the first perfusion liquid in the collection means **(64, 71).**

4. The exchange method for perfusion liquids for perfusing an organ through an *ex vivo* perfusion system **(1)** according to claim **3** wherein step b) further comprises the steps of:
- determining a time interval wherein the first amount of first perfusion liquid drained is equal to a respective predefined value; and
- determining that, when the time interval has elapsed, the first amount of first perfusion liquid drained is equal to the respective predefined value.

5. The exchange method for perfusion liquids for perfusing an organ through an *ex vivo* perfusion system **(1)** according to claim **4** wherein step c) comprises the steps of:
- introducing a first amount of the second perfusion liquid into the perfusion circuit **(39, 49, 50)** of the *ex vivo* perfusion system **(1)** according to a first flow (Q_{inf}); and
- draining a second amount of the first perfusion liquid during the introduction of the first amount of the second perfusion liquid into the collection means **(64, 71)** of the *ex vivo* perfusion system **(1)** according to a second flow (Qₒᵤₜ).

6. The exchange method for perfusion liquids for perfusing an organ through an *ex vivo* perfusion system **(1)** according to claim **5** wherein step c) further comprises the steps of:
- determining a time interval wherein the second amount of first perfusion liquid drained and the first amount of second perfusion liquid infused are the same;
- determining that, when the time interval has elapsed, the second amount of first perfusion liquid drained and the first amount of second perfusion liquid infused are the same; and
- closing the valves associated with the collection means **(64, 71)** and the infusion line **(73, 75).**

7. The exchange method for perfusion liquids for perfusing an organ through an *ex vivo* perfusion system **(1)** according to any one of claims 2-6 and further comprising a step of f) modifying parameters of the second perfusion liquid in the perfusion circuit **(39, 49, 50),** wherein the parameters are relative to the temperature, pressure and flow of the second perfusion liquid and are modulated so that they are equal to predefined values.

8. The exchange method for perfusion liquids for perfusing an organ through an *ex vivo* perfusion system **(1)** according to any one of the preceding claims wherein the first perfusion liquid is an acellular solution.

9. The exchange method for perfusion liquids for perfusing an organ through an *ex vivo* perfusion system **(1)** according to any one of the preceding claims wherein the second perfusion liquid is a colloidal base.

10. The exchange method for perfusion liquids for perfusing an organ through an *ex vivo* perfusion system **(1)** according to claim 8 wherein the second perfusion liquid is polygeline.

## Patentansprüche

1. Austauschverfahren für Perfusionsflüssigkeiten zum Perfundieren eines Organs durch ein Ex-vivo-Perfusionssystem **(1);**
wobei das Ex-vivo-Perfusionssystem **(1)** umfasst:
- einen Behälter **(3)** für ein zu perfundierendes Organ, wobei der Behälter **(3)** ein erstes Reservoir **(17)** umfasst, das anfänglich eine erste Perfusionsflüssigkeit enthält;
- einen Perfusionskreislauf **(39, 49, 50),** der fluidisch mit dem ersten Reservoir **(17)** verbunden ist, um das Organ mit der ersten Perfusionsflüssigkeit zu perfundieren;
- Sammelmittel **(64, 71),** die konfiguriert sind, um die erste Perfusionsflüssigkeit am Ende der Perfusion aufzunehmen; und
- eine Zuführleitung **(73, 75),** die dazu ausgelegt ist, ein zweites Reservoir **(72, 74),** das eine zweite Perfusionsflüssigkeit enthält, die sich von der ersten Perfusionsflüssigkeit unterscheidet, mit dem Perfusionskreislauf **(39,49, 50)** zu verbinden,
wobei die Zuführleitung **(73, 75)** mit einem Ventil versehen ist, das so ausgelegt ist, dass es geöffnet und geschlossen werden kann, damit die zweite Perfusionsflüssigkeit in den Perfusionskreislauf **(39, 49, 50)** eingeleitet werden kann,
wobei das Ex-vivo-Perfusionssystem **(1)** ferner ein Thermoregulationssystem **(6)** umfasst, das mit einer Thermoregulationsplatte **(7)** gekoppelt ist, und wobei die Thermoregulationsplatte **(7)** angepasst ist, um den Behälter **(3)** zu tragen und dank des Thermoregulationssystems **(6)** wieder zu erwärmen oder zu kühlen, um die in dem Behälter **(3)** enthaltene Perfusionsflüssigkeit wieder zu erwärmen oder zu kühlen,
wobei das Verfahren nacheinander die folgenden Schritte umfasst:
a) Perfundieren des Organs mit einer Anfangsmenge der ersten Perfusionsflüssigkeit mittels des Perfusionskreislaufs **(39, 49, 50);**
b) während der Perfusion des Organs mit der ersten Perfusionsflüssigkeit, Ablassen einer ersten Menge der ersten Perfusionsflüssigkeit, um die Menge der ersten Perfusionsflüssigkeit in dem Perfusionskreislauf zu reduzieren;
c) während der Perfusion des Organs mit der ersten Perfusionsflüssigkeit, Ersetzen der Menge der ersten Perfusionsflüssigkeit im Perfusionskreislauf durch eine gleiche Menge der zweiten Perfusionsflüssigkeit; und
d) Fortsetzen der Perfusion des Organs mit der zweiten Perfusionsflüssigkeit,
wobei, ab Schritt a), die Temperatur der Thermoregulationsplatte **(7)** allmählich erhöht wird, um von Hypothermie zu Unter- und Normothermie überzugehen.

2. Austauschverfahren für Perfusionsflüssigkeiten zum Perfundieren eines Organs durch ein *Ex-vivo*-Perfusionssystem **(1)** nach Anspruch **1** und ferner umfassend den Schritt e) des Zugebens von Zellen, Substanzen und/oder Arzneimitteln zu der zweiten Perfusionsflüssigkeit.

3. Austauschverfahren für Perfusionsflüssigkeiten zum Perfundieren eines Organs durch ein *Ex-Vivo* -Perfusionssystem **(1)** nach einem der vorhergehenden Ansprüche, wobei die Sammelmittel **(64, 71)** mit einem Ventil versehen sind, das so ausgelegt ist, dass es geöffnet und geschlossen werden kann, um die Perfusionsflüssigkeit umzuleiten und zu bewirken, dass sie vollständig in die zweiten Sammelmittel **(64, 71)** fließt, und wobei Schritt b) die folgenden Schritte umfasst:
- Öffnen des Ventils, das mit den Sammelmitteln **(64, 71)** assoziiert ist; und
- Ablassen der ersten Menge der ersten Perfusionsflüssigkeit in die Sammelmittel **(64, 71).**

4. Austauschverfahren für Perfusionsflüssigkeiten zum Perfundieren eines Organs durch ein *Ex-vivo*-Perfusionssystem **(1)** nach Anspruch **3,** wobei Schritt b) ferner die folgenden Schritte umfasst:
- Bestimmen eines Zeitintervalls, in dem die erste Menge der abgelassenen ersten Perfusionsflüssigkeit gleich einem jeweiligen vordefinierten Wert ist; und
- Bestimmen, dass, nach Ablauf des Zeitintervalls, die erste Menge der abgelassenen ersten Perfusionsflüssigkeit gleich dem jeweiligen vordefinierten Wert ist.

5. Austauschverfahren für Perfusionsflüssigkeiten zum Perfundieren eines Organs durch ein *Ex-vivo*-Perfusionssystem **(1)** nach Anspruch **4,** wobei Schritt c) die folgenden Schritte umfasst:
- Einleiten einer ersten Menge der zweiten Perfusionsflüssigkeit in den Perfusionskreislauf **(39, 49, 50)** des *Ex-vivo*-Perfusionssystems **(1)** gemäß einem ersten Fluss (Q_{inf}); und
- Ablassen einer zweiten Menge der ersten Perfusionsflüssigkeit während der Einleitung der ersten Menge der zweiten Perfusionsflüssigkeit in die Sammelmittel **(64, 71)** des *Ex-vivo*-Perfusionssystems **(1)** gemäß einem zweiten Fluss (Qₒᵤₜ).

6. Austauschverfahren für Perfusionsflüssigkeiten zum Perfundieren eines Organs durch ein *Ex-vivo*-Perfusionssystem **(1)** nach Anspruch **5,** wobei Schritt c) die folgenden Schritte umfasst:
- Bestimmen eines Zeitintervalls, in dem die zweite Menge der abgelassenen ersten Perfusionsflüssigkeit und die erste Menge der infundierten zweiten Perfusionsflüssigkeit gleich sind;
- Bestimmen, dass, nach Ablauf des Zeitintervalls, die zweite Menge der abgelassenen ersten Perfusionsflüssigkeit und die erste Menge der infundierten zweiten Perfusionsflüssigkeit gleich sind; und
- Schließen der Ventile, die mit den Sammelmitteln **(64, 71)** und der Infusionsleitung **(73, 75)** assoziiert sind.

7. Austauschverfahren für Perfusionsflüssigkeiten zum Perfundieren eines Organs durch ein *Ex-vivo*-Perfusionssystem **(1)** nach einem der Ansprüche 2-6 und ferner umfassend einen Schritt des f) Modifizierens von Parametern der zweiten Perfusionsflüssigkeit in dem Perfusionskreislauf **(39, 49, 50),** wobei sich die Parameter auf die Temperatur, den Druck und den Fluss der zweiten Perfusionsflüssigkeit beziehen und so moduliert werden, dass sie vordefinierten Werten entsprechen.

8. Austauschverfahren für Perfusionsflüssigkeiten zum Perfundieren eines Organs durch ein Ex-vivo-Perfusionssystem (1) nach einem der vorhergehenden Ansprüche, wobei die erste Perfusionsflüssigkeit eine azelluläre Lösung ist.

9. Austauschverfahren für Perfusionsflüssigkeiten zum Perfundieren eines Organs durch ein Ex-vivo-Perfusionssystem **(1)** nach einem der vorhergehenden Ansprüche, wobei die zweite Perfusionsflüssigkeit eine kolloidale Base ist.

10. Austauschverfahren für Perfusionsflüssigkeiten zum Perfundieren eines Organs durch ein Ex-vivo-Perfusionssystem **(1)** nach Anspruch 8, wobei die zweite Perfusionsflüssigkeit Polygelin ist.

## Revendications

1. Procédé d'échange de liquides de perfusion pour perfuser un organe par l'intermédiaire d'un système de perfusion ex *vivo* **(1)** ;
le système de perfusion ex *vivo* **(1)** comprenant :
- un contenant **(3)** pour un organe à perfuser, le contenant **(3)** comprenant un premier réservoir **(17)** contenant initialement un premier liquide de perfusion ;
- un circuit de perfusion **(39, 49, 50)** relié fluidiquement au premier réservoir **(17)** pour perfuser l'organe avec le premier liquide de perfusion ;
- des moyens de collecte **(64, 71)** configurés pour recevoir le premier liquide de perfusion à la fin de la perfusion ; et
- une conduite d'alimentation **(73, 75)** conçue pour relier un deuxième réservoir **(72, 74)** contenant un deuxième liquide de perfusion différent du premier liquide de perfusion au circuit de perfusion **(39, 49, 50),**
dans lequel la conduite d'alimentation **(73, 75)** est pourvue d'une soupape conçue pour être ouverte et fermée afin de permettre l'introduction du deuxième liquide de perfusion dans le circuit de perfusion **(39, 49, 50),**
le système de perfusion *ex vivo* **(1)** comprend en outre un système de thermorégulation **(6),** couplé à une plaque de thermorégulation **(7),** et dans lequel la plaque de thermorégulation **(7)** est adaptée pour porter le contenant **(3)** et pour réchauffer ou refroidir grâce au système de thermorégulation **(6)** pour réchauffer ou refroidir le liquide de perfusion contenu dans le contenant **(3),**
dans lequel le procédé de manière séquentielle les étapes consistant à :
a) perfuser l'organe avec une quantité initiale du premier liquide de perfusion au moyen du circuit de perfusion **(39, 49, 50)** ;
b) pendant la perfusion de l'organe avec le premier liquide de perfusion, drainer une première quantité du premier liquide de perfusion de manière à réduire la quantité du premier liquide de perfusion dans le circuit de perfusion ;
c) pendant la perfusion de l'organe avec le premier liquide de perfusion, remplacer la quantité de premier liquide de perfusion dans le circuit de perfusion par une quantité égale de deuxième liquide de perfusion ; et
d) poursuivre la perfusion de l'organe avec le deuxième liquide de perfusion,
dans lequel, à partir de l'étape a), la température de la plaque de thermorégulation (7) est progressivement augmentée pour passer de l'hypothermie à la sub- et à la normothermie.

2. Procédé d'échange de liquides de perfusion pour perfuser un organe par l'intermédiaire d'un système de perfusion *ex vivo* **(1)** selon la revendication **1** et comprenant en outre l'étape e) d'ajout de cellules, de substances et/ou de médicaments au deuxième liquide de perfusion.

3. Procédé d'échange de liquides de perfusion pour perfuser un organe à travers un système de perfusion ex *vivo* **(1)** selon l'une quelconque des revendications précédentes, dans lequel les moyens de collecte **(64, 71)** sont pourvus d'une soupape conçue pour être ouverte et fermée de manière à dévier le liquide de perfusion et à le faire s'écouler entièrement dans les deuxièmes moyens de collecte **(64, 71)** et dans lequel l'étape b) comprend les étapes consistant à :
- ouvrir la soupape associée au moyen de collecte **(64, 71)** ; et
- drainer la première quantité du premier liquide de perfusion dans le moyen de collecte **(64, 71).**

4. Procédé d'échange de liquides de perfusion pour perfuser un organe à travers un système de perfusion *ex vivo* **(1)** selon la revendication **3** où l'étape b) comprend en outre les étapes consistant à
- déterminer un intervalle de temps dans lequel la première quantité de premier liquide de perfusion drainée est égale à une valeur prédéfinie respective ; et
- déterminer que, lorsque l'intervalle de temps s'est écoulé, la première quantité de premier liquide de perfusion drainée est égale à la valeur prédéfinie respective.

5. Procédé d'échange de liquides de perfusion pour perfuser un organe à travers un système de perfusion ex *vivo* **(1)** selon la revendication **4** où l'étape c) comprend les étapes consistant à :
- introduire une première quantité du deuxième liquide de perfusion dans le circuit de perfusion **(39, 49, 50)** du système de perfusion *ex vivo* **(1)** en fonction d'un premier débit (Q_{inf}) ; et
- drainer une deuxième quantité du premier liquide de perfusion pendant l'introduction de la première quantité du deuxième liquide de perfusion dans les moyens de collecte **(64, 71)** du système de perfusion *ex vivo* **(1)** selon un deuxième débit (Qₒᵤₜ).

6. Procédé d'échange de liquides de perfusion pour perfuser un organe à travers un système de perfusion *ex vivo* **(1)** selon la revendication **5** où l'étape c) comprend en outre les étapes consistant à
- déterminer un intervalle de temps dans lequel la deuxième quantité de premier liquide de perfusion drainée et la première quantité de deuxième liquide de perfusion infusée sont identiques ;
- déterminer que, lorsque l'intervalle de temps s'est écoulé, la deuxième quantité de premier liquide de perfusion drainée et la première quantité de deuxième liquide de perfusion infusée sont identiques ; et
- fermer les soupapes associées aux moyens de collecte **(64, 71)** et à la ligne de perfusion **(73, 75).**

7. Procédé d'échange de liquides de perfusion pour la perfusion d'un organe par un système de perfusion *ex vivo* **(1)** selon l'une quelconque des revendications 2 à 6 et comprenant en outre une étape de f) modification des paramètres du deuxième liquide de perfusion dans le circuit de perfusion **(39, 49, 50),** dans lequel les paramètres sont relatifs à la température, à la pression et au débit du deuxième liquide de perfusion et sont modulés de manière à ce qu'ils soient égaux à des valeurs prédéfinies.

8. Procédé d'échange de liquides de perfusion pour perfuser un organe par l'intermédiaire d'un système de perfusion *ex vivo* **(1)** selon l'une quelconque des revendications précédentes, dans lequel le premier liquide de perfusion est une solution acellulaire.

9. Procédé d'échange de liquides de perfusion pour perfuser un organe par l'intermédiaire d'un système de perfusion *ex vivo* **(1)** selon l'une quelconque des revendications précédentes, dans lequel le deuxième liquide de perfusion est une base colloïdale.

10. Procédé d'échange de liquides de perfusion pour perfuser un organe par l'intermédiaire d'un système de perfusion *ex vivo* **(1)** selon la revendication 8, dans lequel le deuxième liquide de perfusion est de la polygéline.
